# EUROPEAN PATENT SPECIFICATION

(11) **EP 4 496 299 B1**
(45) Date of publication and mention of the grant of the patent: **22.07.2026**
(21) Application number: 23856079.1
(22) Date of filing: 12.04.2023
(51) Int. Cl.: H04M 1/02, G06F 1/16, F16C 11/04

(54) **ROTATING SHAFT APPARATUS AND FOLDABLE-SCREEN DEVICE**
DREHWELLENVORRICHTUNG UND KLAPPBILDSCHIRMVORRICHTUNG
APPAREIL À ARBRE ROTATIF ET DISPOSITIF À ÉCRAN PLIABLE

(30) Priority: 22.08.2022 CN 202211007225
(43) Date of publication of application: 22.01.2025
(73) Proprietor: Honor Device Co., Ltd., Shenzhen, Guangdong 518040 (CN)
(72) Inventor: SU, Shuai, Shenzhen, Guangdong 518040 (CN); CHEN, Ruihao, Shenzhen, Guangdong 518040 (CN); DONG, Shaohong, Shenzhen, Guangdong 518040 (CN); DONG, Changfu, Shenzhen, Guangdong 518040 (CN); PENG, Gaofeng, Shenzhen, Guangdong 518040 (CN); JIN, Kaifang, Shenzhen, Guangdong 518040 (CN)
(74) Representative: Goddar, Heinz J.
(86) International application number: PCT/CN2023/087756
(87) International publication number: WO 2024/040984

(56) References cited:
- CN-A- 113 194 183
- CN-A- 113 923 279
- CN-A- 114 006 963
- CN-A- 114 338 864
- CN-A- 114 688 147
- CN-A- 114 697 416
- CN-A- 114 697 417
- CN-U- 216 162 735
- JP-A- 2020 133 853
- KR-B1- 102 250 197
- US-A1- 2015 055 287

## Description

This application claims priority to Chinese Patent Application No. 202211007225.0, filed with the China National Intellectual Property Administration on August 22, 2022 and entitled "ROTATING SHAFT APPARATUS AND FOLDABLE-SCREEN DEVICE".

### TECHNICAL FIELD

Embodiments of this application relate to the field of terminal technologies, and in particular, to a rotating shaft apparatus and a foldable-screen device.

### BACKGROUND

With explosive growth of electronic devices, the electronic device has more functions. A display of the electronic device is configured to present image information to a user. In some usage scenarios, the user expects that the display of the electronic device can have a larger display area. Currently, the electronic device uses a single screen for display. A larger display area indicates a larger size of the electronic device, resulting in loss of portability of the electronic device.

The electronic device may use a foldable structure to balance the size and the display area of the electronic device. For example, two housings may rotate relative to each other around a rotating shaft apparatus to be unfolded or folded. A flexible display is covered on the two housings. When the two housings are unfolded to a same plane, the flexible display is in an unfolded state and has a large display area. When the two housings are folded with each other, the flexible display is in a folded state, and a volume of the electronic device is small. When the flexible display is in the unfolded state, stability of support of the rotating shaft apparatus for the flexible display is poor, which affects flatness of the flexible display in the unfolded state.
CN 114 697 416 A discloses a folding mechanism and electronic equipment. The folding mechanism comprises a shaft seat, a door plate, a support and a supporting plate. The door plate can move towards the shaft seat or move away from the shaft seat. The bracket comprises a main body and a revolute pair fixedly connected with the main body, and the revolute pair is rotationally connected with the shaft seat; the supporting plate comprises a main plate and a kinematic pair fixedly connected with the main plate, and the kinematic pair is rotationally connected with the support and slidably connected with the shaft seat.
CN 113 194 183 A discloses a folding mechanism and electronic equipment, and belongs to the field of communication equipment. The folding mechanism comprises a base part, a first shell base, a second shell base, a first screen supporting plate, a second screen supporting plate and a third screen supporting plate, the first shell base is rotationally arranged on the first screen supporting plate, the second shell base is rotationally arranged on the second screen supporting plate, the third screen supporting plate is movably connected with the base part in the supporting direction of the third screen supporting plate; the first shell base is rotatably connected with the base part through a first swing arm, the second shell base is rotatably connected with the base part through a second swing arm, the first screen supporting plate is slidably and rotatably connected with the base part through a third swing arm, and the second screen supporting plate is slidably and rotatably connected with the base part through a fourth swing arm, the rotating axes of the first swing arm and the third swing arm are arranged at intervals, and the rotating axes of the second swing arm and the fourth swing arm are arranged at intervals.

### SUMMARY

Embodiments of this application provide a rotating shaft apparatus and a foldable-screen device, which can improve stability of support of the rotating shaft apparatus for a flexible display. The invention provides a rotating shaft apparatus of claim 1 and a foldable-screen device of claim 14. Further embodiments are disclosed in the dependent claims. Embodiments in the following disruption not covered by the claims shall be considered as examples helpful for understanding the invention.

A first aspect of this application provides a rotating shaft apparatus, and the rotating shaft apparatus is used in a foldable-screen device. The rotating shaft apparatus includes at least a back cover, a lifting/lowering driving assembly, a lifting/lowering plate, a screen support assembly, and a screen support door plate.

The lifting/lowering driving assembly includes a transmission swing arm, a transmission shaft, and a lifting/lowering driving portion. The transmission swing arm is connected to the transmission shaft. The transmission shaft is rotatably connected to the back cover. The lifting/lowering driving portion is connected to the transmission shaft. The lifting/lowering plate is disposed corresponding to the back cover. The lifting/lowering driving portion is connected to the lifting/lowering plate. The transmission swing arm is slidably connected to the screen support assembly. At least one side of the lifting/lowering plate is disposed, in an axial direction of the transmission shaft, with the screen support door plate. The screen support door plate is rotatably connected to the screen support assembly, and the screen support door plate is slidably connected to the back cover. The screen support assembly drives, by using the transmission swing arm, the transmission shaft to rotate relative to the back cover, to be switched between an unfolded position and a folded position. The transmission shaft drives the lifting/lowering driving portion to move. The lifting/lowering driving portion drives the lifting/lowering plate to rise or fall away from or close to the back cover, to enable the lifting/lowering plate to be switched between a rising position and a falling position. The screen support assembly drives the screen support door plate to rotate relative to the screen support assembly and slide synchronously relative to the back cover.

The rotating shaft apparatus in embodiments of this application includes the back cover, the lifting/lowering driving assembly, the lifting/lowering plate, the screen support assembly, and the screen support door plate. The screen support assembly, the lifting/lowering driving assembly, the lifting/lowering plate, and the screen support door plate may move together. When the screen support assembly is in the unfolded position, the lifting/lowering plate may be in the rising position, so that the lifting/lowering plate may provide effective support for a flexible display disposed above the rotating shaft apparatus. This helps improve flatness of the flexible display in an unfolded state and improve use experience of the flexible display.

In a possible implementation, there are at least two lifting/lowering plates. The lifting/lowering plate and the screen support door plate are alternately disposed in the axial direction of the transmission shaft. Therefore, there is no interference between positions of each lifting/lowering plate and each screen support door plate, so that no avoidance space for avoiding the screen support door plate needs to be provided on each lifting/lowering plate, which helps reduce a quantity of holes provided on each lifting/lowering plate.

In a possible implementation, in the axial direction of the transmission shaft, two ends of the lifting/lowering plate each are correspondingly disposed with the lifting/lowering driving portion. When the transmission shaft rotates relative to the back cover, the lifting/lowering driving portions correspondingly disposed at the two ends of the lifting/lowering plate may synchronously apply lifting/lowering driving forces to the lifting/lowering plate. This allows for a balanced distribution of forces on the lifting/lowering plate as a whole, and helps improve stability of a rising/falling motion process.

In a possible implementation, the lifting/lowering driving portion includes an actuating portion. The actuating portion is offset from an axis of the transmission shaft. The lifting/lowering plate includes a sliding groove. The actuating portion cooperates with the sliding groove. The transmission shaft drives the actuating portion to rotate relative to the sliding groove and slide relative to the sliding groove, to drive the lifting/lowering plate to rise or fall. When the actuating portion moves around the axis of the transmission shaft, the sliding groove of the lifting/lowering plate may avoid the actuating portion, so that no positional interference occurs between the lifting/lowering plate and the actuating portion.

In a possible implementation, the transmission shaft includes a first rotating shaft. At least one end of the first rotating shaft is disposed with the lifting/lowering driving portion. The transmission swing arm includes a first swing arm. The first swing arm is connected to the first rotating shaft. The screen support assembly includes a screen pressing plate and a first rail. The first rail is connected to the screen pressing plate. The first swing arm is slidably connected to the first rail. When the screen support assembly is switched between the unfolded position and the folded position, the first swing arm slides relative to the first rail, and the first swing arm drives the first rotating shaft to rotate.

In a possible implementation, the transmission shaft further includes a second rotating shaft. At least one end of the second rotating shaft is disposed with the lifting/lowering driving portion. The transmission swing arm includes a second swing arm. The second swing arm is connected to the second rotating shaft. The screen support assembly includes an adapter, the screen pressing plate, and a second rail. The adapter is connected to the screen pressing plate. The second rail is disposed in the adapter. The second swing arm is slidably connected to the second rail. When the screen support assembly is switched between the unfolded position and the folded position, the second swing arm slides relative to the second rail, and the second swing arm drives the second rotating shaft to rotate.

In a possible implementation, the screen support door plate is rotatably connected to the adapter.

In a possible implementation, the screen pressing plate includes an avoidance notch. The screen support door plate includes a screen support block. The screen support block is disposed corresponding to the avoidance notch. When the screen support assembly is switched between the unfolded position and the folded position, the screen support door plate rotates relative to the screen support assembly, and the screen support door plate slides relative to the back cover, to drive the screen support block to move in the avoidance notch.

In a possible implementation, two screen pressing plates are connected to the back cover. Two screen support door plates located on a same side of the lifting/lowering plate are connected to the back cover. In a direction perpendicular to the axial direction of the transmission shaft, avoidance notches of the two screen pressing plates are staggered, and the screen support blocks of the two screen support door plates are staggered.

In a possible implementation, two opposite sides of the lifting/lowering plate each are disposed with the second rotating shaft and the second swing arm. The second swing arm includes a socket portion. The socket portion is sleeved on the second rotating shaft. The socket portion includes a helical hole. The rotating shaft apparatus further includes a transmission slider. The transmission slider is disposed between two second rotating shafts. The transmission slider includes a guide portion. The guide portion and the helical hole slidably cooperate. When the socket portion drives the second rotating shaft to rotate synchronously, the socket portion drives the transmission slider to move synchronously in an axial direction of the second rotating shaft.

When the second rotating shaft on one side of the lifting/lowering plate rotates relative to the back cover under a force, power is transmitted to the second rotating shaft on the other side by using the socket portion and the transmission slider, to effectively ensure that the second rotating shafts on the two opposite sides of the lifting/lowering plate can rotate synchronously by using the transmission slider, and improve rotation accuracy of the second rotating shaft.

In a possible implementation, the socket portion includes an accommodation portion and a push-top cam facing the accommodation portion. The rotating shaft apparatus further includes a damping component. At least a part of the damping component is located in the accommodation portion. The damping component includes an elastic member and a guide cam. Both the elastic member and the guide cam are sleeved on the second rotating shaft. The guide cam is disposed between the elastic member and the push-top cam. The push-top cam and the guide cam mesh with each other. Two guide cams that are sleeved on the two second rotating shafts and are located on a same side of the elastic member are connected with each other.

The rotating shaft apparatus forms a resistance force to a rotation process of the second rotating shaft by using the push-top cam, the guide cam, and the elastic member, so that the second swing arm and the second rotating shaft can be suspended in a predetermined position, and this helps ensure stability of rotation processes of the second swing arm and the second rotating shaft.

In a possible implementation, in the axial direction of the second rotating shaft, two opposite sides of the elastic member are both disposed with the guide cams.

Two push-top cams may synchronously push the two guide cams to move in the axial direction of the second rotating shaft, so that the two guide cams simultaneously compress or release the elastic member, which helps ensure stability and balance of power transmission of the socket portion and the damping component, and helps further improve stability of the rotation processes of the second swing arm and the second rotating shaft.

In a possible implementation, the lifting/lowering plate is disposed on one side that is of the transmission slider and that faces away from the back cover. The transmission slider includes two sidewalls. An avoidance groove facing the lifting/lowering plate is formed between the two sidewalls. The lifting/lowering plate has an avoidance portion, and the sidewall is provided corresponding to the avoidance portion.

The transmission slider and the lifting/lowering plate are not prone to contact, which reduces a possibility of collision and scraping between the transmission slider and the lifting/lowering plate.

In a possible implementation, the rotating shaft apparatus includes a guide convex portion and a guide concave portion. The guide convex portion is provided on one of the lifting/lowering plate and the back cover, and the guide concave portion is provided on the other one of the lifting/lowering plate and the back cover. The guide convex portion and the guide concave portion are slidably connected in a rising/falling direction of the lifting/lowering plate.

During a rising/falling process of the lifting/lowering plate, the guide convex portion may slide relative to the guide concave portion, so that a manner in which the guide convex portion and the guide concave portion slidably cooperate may provide a guide for the rising/falling process of the lifting/lowering plate, reduce a possibility that the lifting/lowering plate is tilted, and help improve position stability of the lifting/lowering plate during the rising/falling process.

In a possible implementation, a surface that is of the lifting/lowering plate and that faces away from the back cover has a groove. A bottom wall of the groove is arc-shaped.

When the flexible display is in a folded state, the lifting/lowering plate corresponds to a bending region of the flexible display, and the groove on the lifting/lowering plate can effectively avoid the flexible display, to reduce a possibility that the lifting/lowering plate squeezes the flexible display and causes damage to the flexible display.

In a possible implementation, the screen support door plate includes a rotatable connection portion and an arc-shaped sliding portion. The rotatable connection portion is rotatably connected to the screen support assembly. The back cover includes an arc-shaped slide. The arc-shaped sliding portion is slidably connected to the arc-shaped slide.

In a possible implementation, the screen support door plate further includes an insertion hole. The back cover further includes an insertion block. The insertion block passes through the insertion hole. When the screen support assembly is switched between the unfolded position and the folded position, the screen support door plate rotates relative to the screen support assembly, the screen support door plate slides relative to the back cover, and the insertion block moves relative to the insertion hole.

A second aspect of this application provides a foldable-screen device, and the foldable-screen device includes a housing and a flexible display. The housing includes a frame and the foregoing rotating shaft apparatus. The rotating shaft apparatus includes at least a back cover, a lifting/lowering driving assembly, a lifting/lowering plate, a screen support assembly, and a screen support door plate. The lifting/lowering driving assembly includes a transmission swing arm, a transmission shaft, and a lifting/lowering driving portion. The transmission swing arm is connected to the transmission shaft. The transmission shaft is rotatably connected to the back cover. The lifting/lowering driving portion is connected to the transmission shaft. The lifting/lowering plate is disposed corresponding to the back cover. The lifting/lowering driving portion is connected to the lifting/lowering plate. The transmission swing arm is slidably connected to the screen support assembly. At least one side of the lifting/lowering plate is disposed, in an axial direction of the transmission shaft, with the screen support door plate. The screen support door plate is rotatably connected to the screen support assembly, and the screen support door plate is slidably connected to the back cover. The screen support assembly drives, by using the transmission swing arm, the transmission shaft to rotate relative to the back cover, to be switched between an unfolded position and a folded position. The transmission shaft drives the lifting/lowering driving portion to move. The lifting/lowering driving portion drives the lifting/lowering plate to rise or fall away from or close to the back cover, to enable the lifting/lowering plate to be switched between a rising position and a falling position. The screen support assembly drives the screen support door plate to rotate relative to the screen support assembly and slide synchronously relative to the back cover. The frame is connected to the screen support assembly. The flexible display is connected to the frame.

### BRIEF DESCRIPTION OF DRAWINGS

FIG. 1 is a diagram of a structure of a foldable-screen device in an unfolded state according to an embodiment of this application;
FIG. 2 is a diagram of a structure of a foldable-screen device in a semi-folded state according to an embodiment of this application;
FIG. 3 is a diagram of a structure of a foldable-screen device in a folded state according to an embodiment of this application;
FIG. 4 is a diagram of a partial exploded structure of a foldable-screen device according to an embodiment of this application;
FIG. 5 is a diagram of a structure of a rotating shaft apparatus according to an embodiment of this application;
FIG. 6 is a diagram of a partial exploded structure of a rotating shaft apparatus according to an embodiment of this application;
FIG. 7 is an enlarged diagram of a position H in FIG. 6;
FIG. 8 is a diagram of a structure of a rotating shaft apparatus according to an embodiment of this application;
FIG. 9 is a diagram of a sectional-view structure in a P1-P1 direction in FIG. 8;
FIG. 10 is a diagram of a partial sectional-view structure of a rotating shaft apparatus in a folded state according to an embodiment of this application;
FIG. 11 is a diagram of a sectional-view structure in a P2-P2 direction in FIG. 8;
FIG. 12 is a diagram of a partial sectional-view structure of a rotating shaft apparatus in a folded state according to an embodiment of this application;
FIG. 13 is an enlarged diagram of a position S in FIG. 6;
FIG. 14 is a diagram of a sectional-view structure in a P3-P3 direction in FIG. 8;
FIG. 15 is a diagram of a partial sectional-view structure of a rotating shaft apparatus in a folded state according to an embodiment of this application;
FIG. 16 is a diagram of a sectional-view structure in a direction P4-P4 in FIG. 8;
FIG. 17 is a diagram of a structure of a transmission slider according to an embodiment of this application;
FIG. 18 is a diagram of a structure of a lifting/lowering plate according to an embodiment of this application;
FIG. 19 is a diagram of a structure of a lifting/lowering plate according to an embodiment of this application;
FIG. 20 is a diagram of a sectional-view structure in a P5-P5 direction in FIG. 8;
FIG. 21 is a diagram of a partial sectional-view structure of a rotating shaft apparatus in a folded state according to an embodiment of this application; and
FIG. 22 is an enlarged diagram of a position M in FIG. 5.

### Reference numerals:

10: foldable-screen device;
20: housing;
30: rotating shaft apparatus;
   31: back cover; 311: shaft base; 312: arc-shaped slide; 313: insertion block;
   32: lifting/lowering driving assembly;
      321: transmission swing arm; 3211: first swing arm; 3211a: first slide post; 3212: second swing arm; 3212a: second slide post; 3213: socket portion; 3213a: helical hole; 3213b: push-top cam;
      322: transmission shaft; 3221: first rotating shaft; 3222: second rotating shaft;
      323: lifting/lowering driving portion; 3231: actuating portion;
   33: lifting/lowering plate; 331: sliding groove; 332: avoidance portion; 333: narrowed segment; 334: groove;
   34: screen support assembly;
      341: screen pressing plate; 3411: avoidance notch
      342: first rail;
      343: adapter;
      344: second rail;
   35: screen support door plate; 351: screen support block; 352: rotatable connection portion; 353: arc-shaped sliding portion; 354: insertion hole;
   36: transmission slider; 361: guide portion; 362: sidewall; 363: avoidance groove;
   37: damping component; 371: elastic member; 372: guide cam;
40: frame;
50: flexible display; 51: first display region; 52: second display region; 53: third display region;
60: electronic component;
70: printed circuit board;
X: axial direction; Y: width direction; Z: thickness direction.

### DESCRIPTION OF EMBODIMENTS

An electronic device in embodiments of this application may be referred to as user equipment (user equipment, UE), a terminal (terminal), or the like. For example, the electronic device may be a mobile terminal such as a tablet computer (portable Android device, PAD), a personal digital assistant (personal digital assistant, PDA), a handheld device having a wireless communication function, a computing device, a vehicle-mounted device, a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), or a wireless terminal in a smart home (smart home), or a fixed terminal. A form of the terminal device is not specifically limited in embodiments of this application.

In an embodiment of this application, an example in which the electronic device is a handheld device having a wireless communication function is used for description. The handheld device having a wireless communication function is a foldable-screen device. The foldable-screen device may be a foldable mobile phone including a foldable flexible display.

In a related technology, the foldable-screen device includes a frame and a rotating shaft apparatus. Two sides of the rotating shaft apparatus each are disposed with the frame. The frame rotates relative to the rotating shaft apparatus, so that the frame is switched between a folded state and an unfolded state. The flexible display is connected to the frame. When the frame is switched between the folded state and the unfolded state, the flexible display may be switched synchronously between the unfolded state and the folded state. When the flexible display is in the unfolded state, the frame provides support for the flexible display. However, in a region that is of the flexible display and that corresponds to the rotating shaft apparatus, support effect of the rotating shaft apparatus on the flexible display is poor. Consequently, flatness of the region that is of the flexible display and that corresponds to the rotating shaft apparatus is poor, which affects use experience of the flexible display.

According to the foldable-screen device provided in embodiments of this application, the rotating shaft apparatus provides effective support for the flexible display in the unfolded state. This helps improve flatness of the flexible display in the unfolded state and improve use experience of the flexible display.

The following describes implementations provided in embodiments of this application.

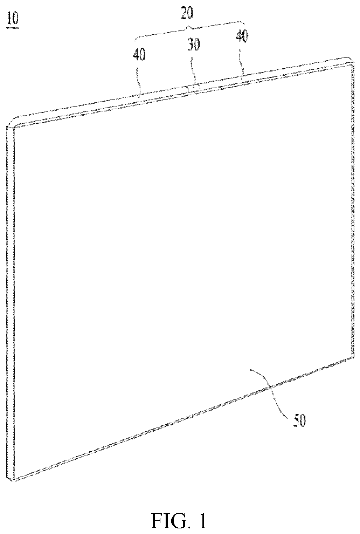

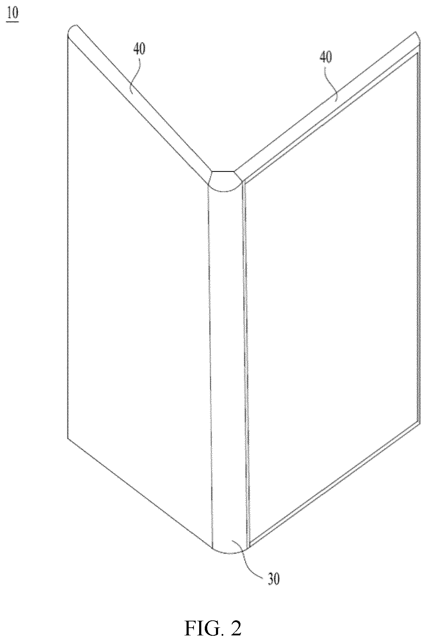

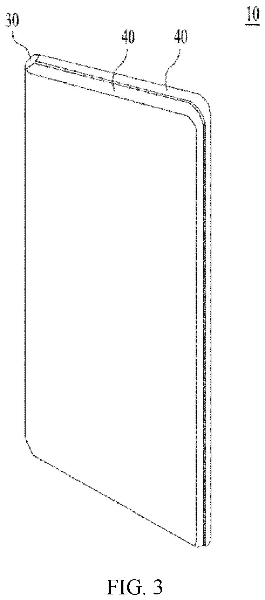

FIG. 1 schematically shows a structure of a foldable-screen device 10 in an unfolded state according to an embodiment. FIG. 2 schematically shows a structure of the foldable-screen device 10 in a semi-folded state. FIG. 3 schematically shows a structure of the foldable-screen device 10 in the folded state. As shown in FIG. 1 to FIG. 3, the foldable-screen device 10 includes a housing 20 and a flexible display 50. The housing 20 includes a rotating shaft apparatus 30 and a frame 40. The frame 40 is connected to the rotating shaft apparatus 30. Two opposite sides of the rotating shaft apparatus 30 each is disposed with the frame 40. The flexible display 50 is connected to the frame 40.

The frame 40 can rotate and be folded relative to the rotating shaft apparatus 30. In this application, an example in which the foldable-screen device 10 includes two frames 40 is used for description. When the two frames 40 are stacked with each other, the foldable-screen device 10 is in the folded state. When the two frames 40 move away from each other from a stacked state and unfolded to a same plane, the foldable-screen device 10 is in the unfolded state. A process in which the frame 40 changes from the folded state to the unfolded state is an unfolding process, and a process in which the frame 40 changes from the unfolded state to the folded state is a folding process.

The frame 40 may include a middle frame. The frame 40 may be connected to the rotating shaft apparatus 30 by using the middle frame.

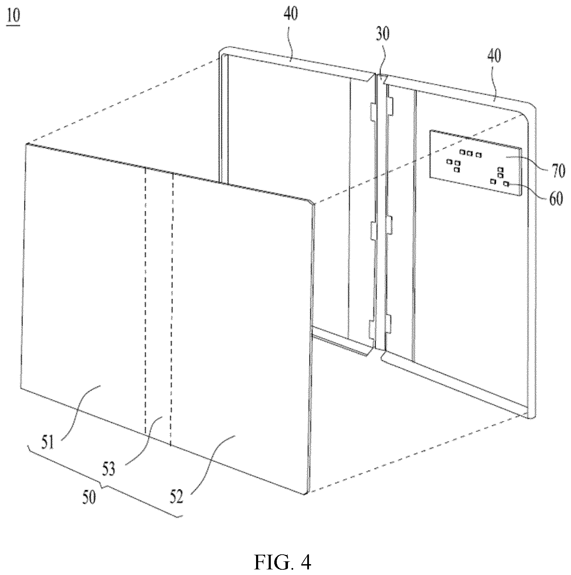

FIG. 4 schematically shows a partial exploded structure of the foldable-screen device 10 according to this application. As shown in FIG. 4, the flexible display 50 includes a display portion for displaying image information. The flexible display 50 is bendable and may be folded under an external force. When the foldable-screen device 10 is in the unfolded state, the display portion of the flexible display 50 is unfolded to present the image information to a user. The display portion may include a first display region 51, a second display region 52, and a third display region 53. The first display region 51 and the second display region 52 are disposed corresponding to the two frames 40. The third display region 53 may be disposed corresponding to the rotating shaft apparatus 30.

When the two frames 40 are in the folded state, the display portion is in a bending state. The first display region 51 and the second display region 52 of the display portion may be stacked with each other, and the third display region 53 may bend into an arc-shaped state. For example, the third display region 53 may bend into a drop shape.

When the two frames 40 are in the unfolded state, the display portion is in the unfolded state, and the first display region 51, the second display region 52, and the third display region 53 present a flat state. The foldable-screen device 10 may change an overall size of the foldable-screen device 10 in a folding or unfolding manner, and may also have a large display area in the unfolded state.

The two frames 40 of the foldable-screen device 10 each may be disposed with an electronic component 60. For example, the electronic component 60 may include but is not limited to a processor, a memory, or a camera module. In some examples, a printed circuit board (Printed Circuit Board, PCB) 70 is disposed in the frame 40. The electronic component 60 is disposed on the printed circuit board 70.

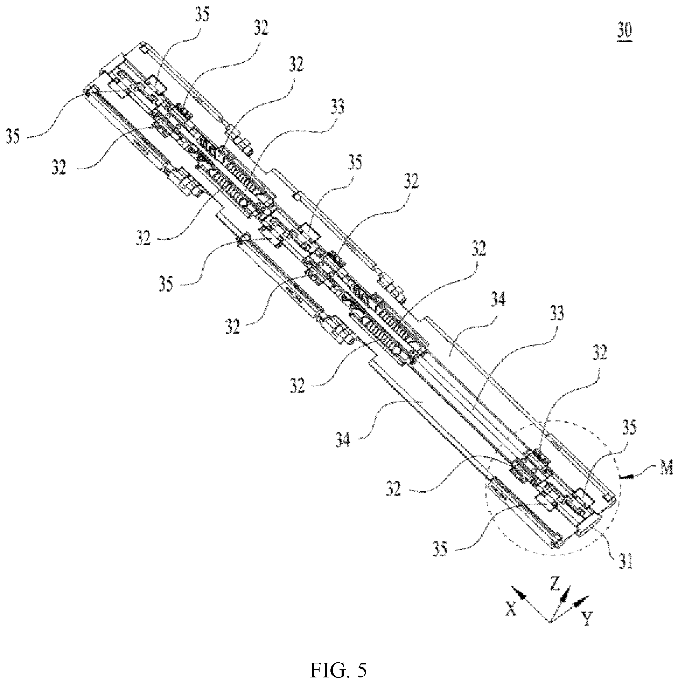

FIG. 5 schematically shows a structure of the rotating shaft apparatus 30 according to this application. As shown in FIG. 5, the rotating shaft apparatus 30 in this application includes a back cover 31. The back cover 31 may be located between the two frames 40. The back cover 31 may provide coverage for another structural member on the rotating shaft apparatus 30, so that an appearance of an electronic device is neat and beautiful. When the two frames 40 rotate relative to the rotating shaft apparatus 30, a position of the back cover 31 may remain relatively fixed. In some examples, when the two frames 40 are in the unfolded state, the two frames 40 may cover the back cover 31, so that the back cover 31 is in an invisible state. When the two frames 40 are in the folded state, at least a part of the back cover 31 may be exposed to the two frames 40 and in a visible state. The back cover 31 may provide a mounting base for a related structural member in the rotating shaft apparatus 30. In some examples, the back cover 31 may be of a strip-shaped structure. One side that is of the back cover 31 and that faces the flexible display 50 may have an accommodation concave portion.

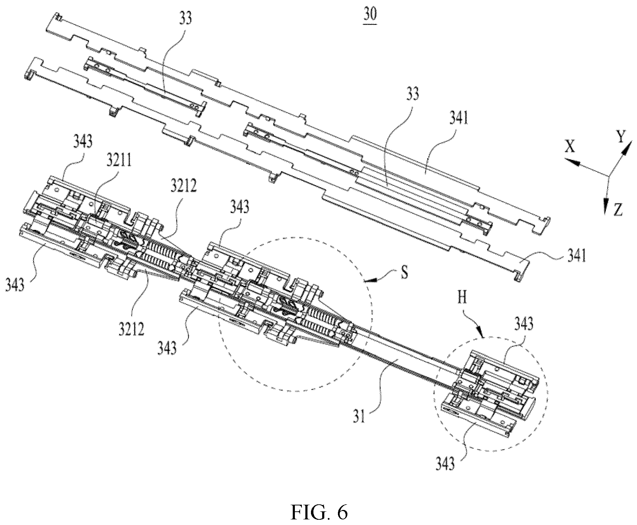

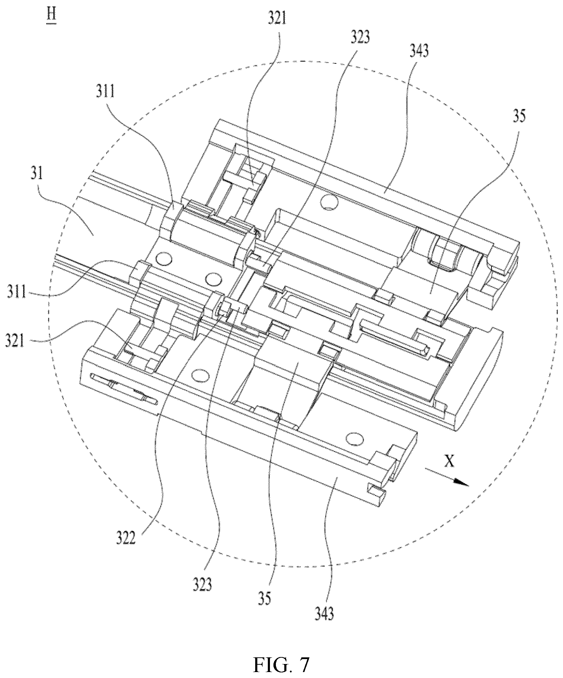

FIG. 6 schematically shows a partial exploded structure of the rotating shaft apparatus 30 according to this application. FIG. 7 is an enlarged diagram of a position H in FIG. 6. As shown in FIG. 6 and FIG. 7, the rotating shaft apparatus 30 further includes a lifting/lowering driving assembly 32. The lifting/lowering driving assembly 32 includes a transmission swing arm 321, a transmission shaft 322, and a lifting/lowering driving portion 323. The transmission swing arm 321 is connected to the transmission shaft 322. The transmission shaft 322 is rotatably connected to the back cover 31. The lifting/lowering driving portion 323 is connected to the transmission shaft 322. When the transmission swing arm 321 swings relative to the back cover 31, the transmission swing arm 321 drives the transmission shaft 322 to rotate relative to the back cover 31. Because the lifting/lowering driving portion 323 is connected to the transmission shaft 322, when the transmission shaft 322 rotates, the transmission shaft 322 may drive the lifting/lowering driving portion 323 to move, so that the transmission swing arm 321, the transmission shaft 322, and the lifting/lowering driving portion 323 move together synchronously.

In some examples, a shaft base 311 may be disposed on the back cover 31. At least a part of the shaft base 311 may be disposed in the accommodation concave portion. The transmission shaft 322 of the lifting/lowering driving assembly 32 is rotatably connected to the shaft base 311.

In some examples, the transmission swing arm 321 may include a limiting hole. The limiting hole may be a non-circular hole. The limiting hole of the transmission swing arm 321 is sleeved on the transmission shaft 322. A shape of a shaft segment that is on the transmission shaft 322 and that cooperates with the limiting hole may match a shape of the limiting hole, so that the transmission swing arm 321 cannot rotate relative to the transmission shaft 322. When swinging, the transmission swing arm 321 may synchronously drive the transmission shaft 322 to rotate. For example, a cross section of the limiting hole of the transmission swing arm 321 may include a circular arc segment and a straight line segment. For example, there is one circular arc segment and one straight line segment. The straight line segment is connected to two end points of the circular arc segment. Alternatively, there are two circular arc segments and two straight line segments. The circular arc segments and the straight line segments are alternately provided. One straight line segment is connected to two end points of the two circular arc segments.

The rotating shaft apparatus 30 further includes a lifting/lowering plate 33. The lifting/lowering plate 33 is disposed corresponding to the back cover 31. The lifting/lowering plate 33 is disposed on the side that is of the back cover 31 and that faces the flexible display 50. The lifting/lowering driving portion 323 of the lifting/lowering driving assembly 32 is connected to the lifting/lowering plate 33. The lifting/lowering driving portion 323 transmits an acting force to the lifting/lowering plate 33. When the transmission shaft 322 of the lifting/lowering driving assembly 32 rotates, the transmission shaft 322 may drive the lifting/lowering driving portion 323 to move, and the lifting/lowering driving portion 323 drives the lifting/lowering plate 33 to rise or fall away from or close to the back cover 31. The lifting/lowering plate 33 is switched between a rising position and a falling position. That the lifting/lowering plate 33 moves away from the back cover 31 is a rising process, and that the lifting/lowering plate 33 moves close to the back cover 31 is a falling process.

The rotating shaft apparatus 30 further includes a screen support assembly 34. The transmission swing arm 321 is slidably connected to the screen support assembly 34. The screen support assembly 34 may provide support for the flexible display 50. When the flexible display 50 is in the unfolded state, the screen support assembly 34 may provide support for the flexible display 50 below the flexible display 50, to reduce a possibility of recess deformation of the flexible display 50, and improve flatness of the flexible display 50. When the flexible display 50 is in the folded state, the screen support assembly 34 may provide support for the flexible display 50, to guide the flexible display 50 to bend toward an expected bending shape, for example, to enable the flexible display 50 to be prone to bend into a drop shape, so as to reduce a possibility that the flexible display 50 breaks due to a small bending radius of the flexible display 50. In some examples, the screen support assembly 34 may provide support for a part that is of the flexible display 50 and that corresponds to the third display region 53.

The screen support assembly 34 drives, by using the transmission swing arm 321, the transmission shaft 322 to rotate relative to the back cover 31, and both the screen support assembly 34 and the transmission swing arm 321 may be switched between an unfolded position and a folded position. When the screen support assembly 34 rotates relative to the back cover 31, the screen support assembly 34 drives the transmission swing arm 321 to rotate relative to the back cover 31, and at the same time, the transmission swing arm 321 slides relative to the screen support assembly 34, so that the transmission swing arm 321 does not form a motion constraint on the screen support assembly 34. In some examples, the frame 40 may be connected to the screen support assembly 34. In some examples, the frame 40 includes the middle frame. The frame 40 may be connected to the screen support assembly 34 by using the middle frame.

When the screen support assembly 34 is switched between the unfolded position and the folded position, the screen support assembly 34 drives the transmission swing arm 321 to rotate relative to the back cover 31, and at the same time, the transmission swing arm 321, the transmission shaft 322, and the lifting/lowering driving portion 323 move together, so that the lifting/lowering plate 33 is driven by the lifting/lowering driving portion 323 to rise or fall away from or close to the back cover 31, and the lifting/lowering plate 33 can be switched between the rising position and the falling position. When the screen support assembly 34 is in the unfolded position, the flexible display 50 is in the unfolded state, and the lifting/lowering plate 33 is in the rising position, so that the lifting/lowering plate 33 can provide support for the flexible display 50 in the unfolded state. When the screen support assembly 34 is in the folded position, the flexible display 50 is in the folded state, and the lifting/lowering plate 33 is in the falling position, so that the lifting/lowering plate 33 can avoid the flexible display 50 in the folded state, and a possibility that the rotating shaft apparatus 30 squeezes the flexible display 50 in the folded state and causes damage to the flexible display 50 is reduced.

The rotating shaft apparatus 30 further includes a screen support door plate 35. At least one side of the lifting/lowering plate 33 is disposed, in an axial direction X of the transmission shaft 322, with the screen support door plate 35. The screen support door plate 35 is rotatably connected to the screen support assembly 34, and the screen support door plate 35 is slidably connected to the back cover 31.

When the flexible display 50 is folded, the screen support door plate 35 may provide support for the flexible display 50, to guide the flexible display 50 to bend toward the expected bending shape, for example, to enable the flexible display 50 to be prone to bend into the drop shape. The screen support door plate 35 slides relative to the back cover 31, and forms avoidance space below the flexible display 50, to avoid the flexible display 50.

When the screen support assembly 34 rotates relative to the back cover 31, the screen support assembly 34 may drive the screen support door plate 35 to rotate relative to the screen support assembly 34, and at the same time, the screen support door plate 35 slides synchronously relative to the back cover 31, so that the screen support door plate 35 does not form a motion constraint on the screen support assembly 34.

When the screen support assembly 34 is switched between the unfolded position and the folded position, the screen support door plate 35 is unfolded or folded synchronously with the screen support assembly 34.

The rotating shaft apparatus 30 in embodiments of this application includes the back cover 31, the lifting/lowering driving assembly 32, the lifting/lowering plate 33, the screen support assembly 34, and the screen support door plate 35. The screen support assembly 34, the lifting/lowering driving assembly 32, the lifting/lowering plate 33, and the screen support door plate 35 may move together. When the screen support assembly 34 is in the unfolded position, the lifting/lowering plate 33 is in the rising position, so that the lifting/lowering plate 33 may provide effective support for the flexible display 50 disposed above the rotating shaft apparatus 30. This helps improve flatness of the flexible display 50 in the unfolded state and improve use experience of the flexible display 50.

**In** addition, according to a manner in which the lifting/lowering plate 33 and the screen support door plate 35 are disposed in the axial direction X of the transmission shaft 322, the lifting/lowering plate 33 does not need to be provided with a large amount of avoidance space for avoiding the screen support door plate 35, which helps reduce a quantity of holes provided on the lifting/lowering plate 33, improve mechanical strength of the lifting/lowering plate 33, and improve stability of support of the lifting/lowering plate 33 for the flexible display 50.

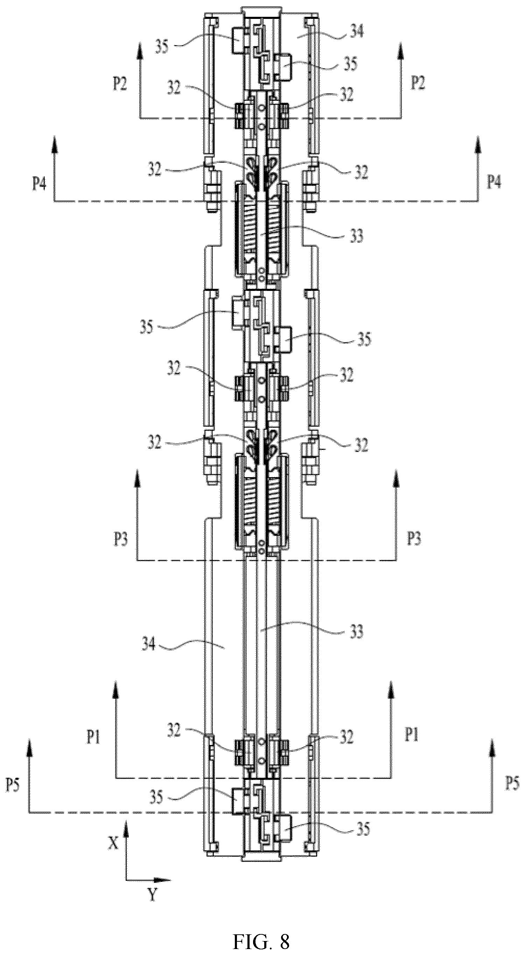

In some implementations, FIG. 8 schematically shows a structure of the rotating shaft apparatus 30 according to this application. As shown in FIG. 8, there may be at least two lifting/lowering plates 33. The lifting/lowering plate 33 and the screen support door plate 35 are alternately disposed in the axial direction X of the transmission shaft 322. Therefore, there is no interference between positions of each lifting/lowering plate 33 and each screen support door plate 35, so that no avoidance space for avoiding the screen support door plate 35 needs to be provided on each lifting/lowering plate 33, which helps reduce the quantity of holes provided on each lifting/lowering plate 33.

In some examples, there may be at least two groups of screen support door plates 35. Each group of screen support door plates 35 may include two screen support door plates 35. For example, there may be two lifting/lowering plates 33 and three groups of screen support door plates 35. For example, the three groups of screen support door plates 35 are spaced apart in the axial direction X of the transmission shaft 322. Two ends of the back cover 31 are correspondingly disposed with one group of screen support door plates 35. One lifting/lowering plate 33 is disposed between two groups of screen support door plates 35, that is, in the axial direction X of the transmission shaft 322, two sides of the lifting/lowering plate 33 are both disposed with the screen support door plates 35.

There may be two screen support assemblies 34. The two screen support assemblies 34 are separately connected to the back cover 31. The two screen support door plates 35 in each group of screen support door plates 35 may be separately connected to the corresponding screen support assembly 34.

In some implementations, in the axial direction X of the transmission shaft 322, the two ends of the lifting/lowering plate 33 each are correspondingly disposed with the lifting/lowering driving portion 323. When the transmission shaft 322 rotates relative to the back cover 31, the lifting/lowering driving portions 323 correspondingly disposed at the two ends of the lifting/lowering plate 33 may synchronously apply lifting/lowering driving forces to the lifting/lowering plate 33. This allows for a balanced distribution of forces on the lifting/lowering plate 33 as a whole, and helps improve stability of a rising/falling motion process.

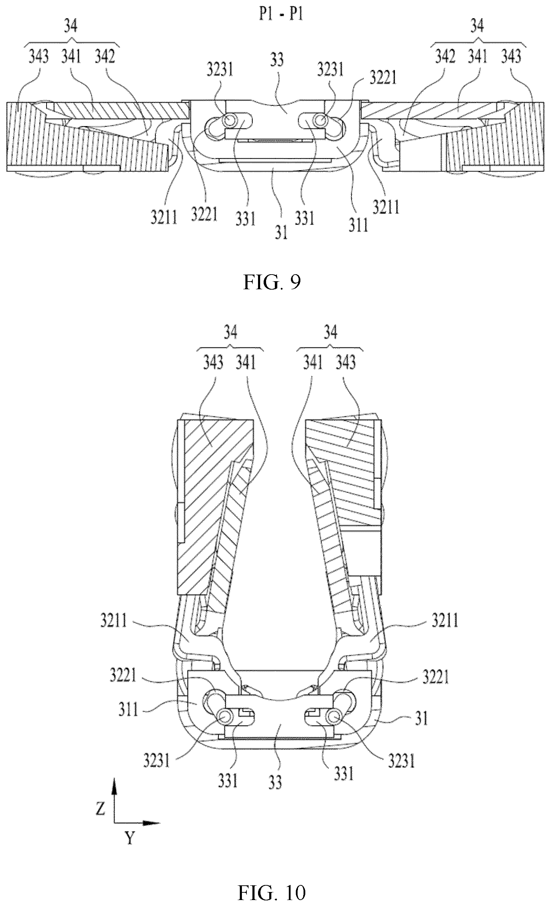

In some implementations, FIG. 9 is a sectional-view structure in a P1-P1 direction in FIG. 8. FIG. 10 schematically shows a partial sectional-view structure of the rotating shaft apparatus 30 in the folded state according to this application. As shown in FIG. 9 and FIG. 10, the lifting/lowering driving portion 323 includes an actuating portion 3231. The actuating portion 3231 is offset from an axis of the transmission shaft 322. When the transmission shaft 322 rotates relative to the back cover 31, a motion track of the actuating portion 3231 may be an arc-shaped track around the axis of the transmission shaft 322. The lifting/lowering plate 33 may include a sliding groove 331. The actuating portion 3231 cooperates with the sliding groove 331 of the lifting/lowering plate 33. The transmission shaft 322 may drive the actuating portion 3231 to rotate relative to the sliding groove 331 of the lifting/lowering plate 33 and, at the same time, slide relative to the sliding groove 331 of the lifting/lowering plate 33, to drive the lifting/lowering plate 33 to rise and fall. When the actuating portion 3231 moves around the axis of the transmission shaft 322, the sliding groove 331 of the lifting/lowering plate 33 may avoid the actuating portion 3231, so that no positional interference occurs between the lifting/lowering plate 33 and the actuating portion 3231.

In some examples, the sliding groove 331 may penetrate a side surface of the lifting/lowering plate 33. The sliding groove 331 has an opening on the side surface of the lifting/lowering plate 33. The actuating portion 3231 of the lifting/lowering driving portion 323 may be mounted into the sliding groove 331 through the opening.

In some examples, in a width direction Y of the back cover 31, the two sides of the lifting/lowering plate 33 each are disposed with the transmission shaft 322 and the lifting/lowering driving portion 323. The width direction Y of the back cover 31 is perpendicular to the axial direction X of the transmission shaft 322. One end of the lifting/lowering plate 33 is correspondingly disposed with two lifting/lowering driving portions 323. The two lifting/lowering driving portions 323 may simultaneously apply acting forces to an end portion of the lifting/lowering plate 33.

In some examples, the lifting/lowering driving portion 323 further includes a connecting block (not shown in the figure). The connecting block is connected to the actuating portion 3231 and the transmission shaft 322. The actuating portion 3231 is disposed in a region that is of the connecting block and that is away from the transmission shaft 322, so that the actuating portion 3231 is offset from one side of the transmission shaft 322. For example, the actuating portion 3231 may be of a columnar structure. An axis of the actuating portion 3231 may be parallel to the axis of the transmission shaft 322.

In some examples, in a thickness direction Z of the lifting/lowering plate 33, two opposite wall surfaces of the sliding groove 331 are both in contact with the actuating portion 3231, so that there can be no clearance between the lifting/lowering plate 33 and the actuating portion 3231. Therefore, when the actuating portion 3231 actuates the lifting/lowering plate 33, the actuating portion 3231 and the lifting/lowering plate 33 may maintain synchronous motion, to reduce a possibility that the lifting/lowering plate 33 and the actuating portion 3231 moves asynchronously or a motion position of the lifting/lowering plate 33 has an error due to the clearance between the actuating portion 3231 and the lifting/lowering plate 33. In addition, impact between the actuating portion 3231 and the lifting/lowering plate 33 is not prone to occur, and a possibility of generating abnormal sounds is reduced. It should be noted that the thickness direction Z of the lifting/lowering plate 33 may be a stacking direction of the lifting/lowering plate 33 and the back cover 31.

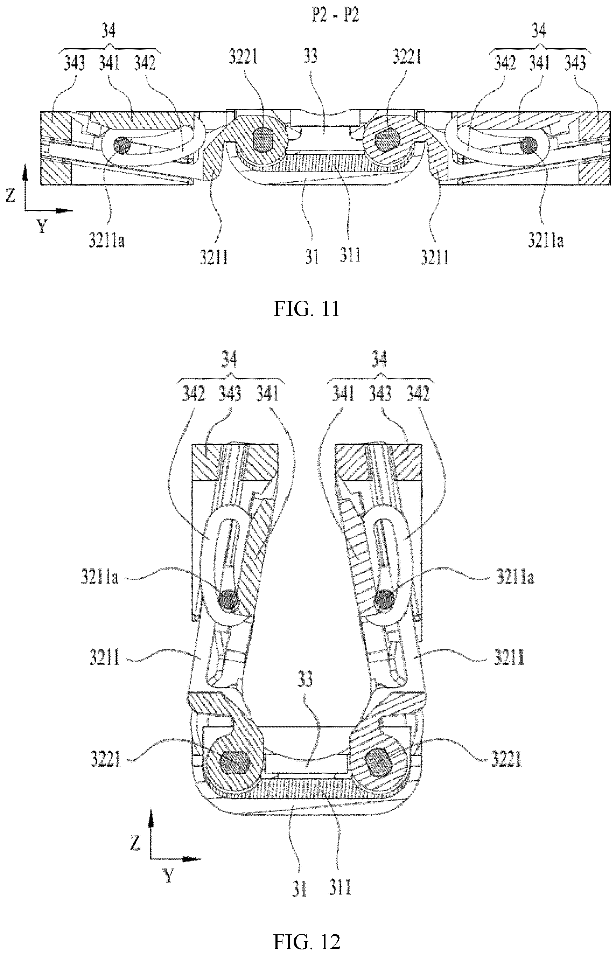

In some implementations, FIG. 11 is a sectional-view structure in a P2-P2 direction in FIG. 8. FIG. 12 schematically shows a partial sectional-view structure of the rotating shaft apparatus 30 in the folded state according to this application. As shown in FIG. 11 and FIG. 12, the transmission shaft 322 includes a first rotating shaft 3221. The first rotating shaft 3221 is rotatably connected to the back cover 31. At least one end of the first rotating shaft 3221 is disposed with the lifting/lowering driving portion 323. The transmission swing arm 321 includes a first swing arm 3211. The first swing arm 3211 is connected to the first rotating shaft 3221. The screen support assembly 34 includes a screen pressing plate 341 and a first rail 342. The first rail 342 is connected to the screen pressing plate 341. The first rail 342 may be disposed below the screen pressing plate 341. The first swing arm 3211 is slidably connected to the first rail 342. When the screen support assembly 34 is switched between the unfolded position and the folded position, the first swing arm 3211 slides relative to the first rail 342, and the first swing arm 3211 drives the first rotating shaft 3221 to rotate.

When the flexible display 50 is folded, the screen pressing plate 341 may provide support for the flexible display 50, to guide the flexible display 50 to bend toward the expected bending shape, for example, to enable the flexible display 50 to be prone to bend into the drop shape, so as to reduce the possibility that the flexible display 50 breaks due to a small bending radius of the flexible display 50.

In some examples, the screen pressing plate 341 and the first rail 342 may be of an integrally formed structure to improve connection strength between the screen pressing plate 341 and the first rail 342.

In some examples, there may be two screen support assemblies 34. In the width direction Y of the back cover 31, the lifting/lowering plate 33 is disposed between two screen pressing plates 341. For example, in the thickness direction Z of the lifting/lowering plate 33, an orthographic projection of the lifting/lowering plate 33 may not overlap an orthographic projection of the screen pressing plate 341.

In some examples, the first rail 342 may be arc-shaped. When the screen support assembly 34 is in the unfolded position, a connection point between the first swing arm 3211 and the first rail 342 is located at one end that is of the first rail 342 and that is away from the lifting/lowering plate 33. When the screen support assembly 34 is in the folded position, a connection point between the first swing arm 3211 and the first rail 342 is located at one end that if of the first rail 342 and that is close to the lifting/lowering plate 33.

For example, the first rail 342 may include an arc-shaped hole. The first swing arm 3211 includes a first slide post 3211a. The first slide post 3211a slidably cooperates with the arc-shaped hole. When the screen support assembly 34 is in the unfolded position, the first slide post 3211a is located at one end that is of the arc-shaped hole and that is away from the lifting/lowering plate 33. When the screen support assembly 34 is in the folded position, the first slide post 3211a is located at one end that is of the arc-shaped hole and that is close to the lifting/lowering plate 33.

In some examples, in an axial direction of the first rotating shaft 3221, a connection region between the first swing arm 3211 and the first rotating shaft 3221 is located on one side of the lifting/lowering driving portion 323. The axial direction X of the transmission shaft 322 may be the same as the axial direction of the first rotating shaft 3221.

In some examples, one end of the first rotating shaft 3221 is disposed with the lifting/lowering driving portion 323. For example, one end that is of the first rotating shaft 3221 and that is close to one end portion of the back cover 31 is disposed with the lifting/lowering driving portion 323.

In some examples, there may be at least two lifting/lowering plates 33. In the axial direction of the first rotating shaft 3221, the at least two lifting/lowering plates 33 may be spaced apart. Each lifting/lowering plate 33 may be correspondingly disposed with the first rotating shaft 3221. The first rotating shaft 3221 correspondingly disposed on each lifting/lowering plate 33 may be independently disposed. For example, there may be one or more groups of first rotating shafts 3221 correspondingly disposed on each lifting/lowering plate 33. This is not specifically limited in this application. One group of first rotating shafts 3221 may include two first rotating shafts 3221. In the width direction Y of the back cover 31, the two first rotating shafts 3221 in one group of first rotating shafts 3221 may be disposed on the two sides of the lifting/lowering plate 33. The two first rotating shafts 3221 each are connected to the first swing arm 3211.

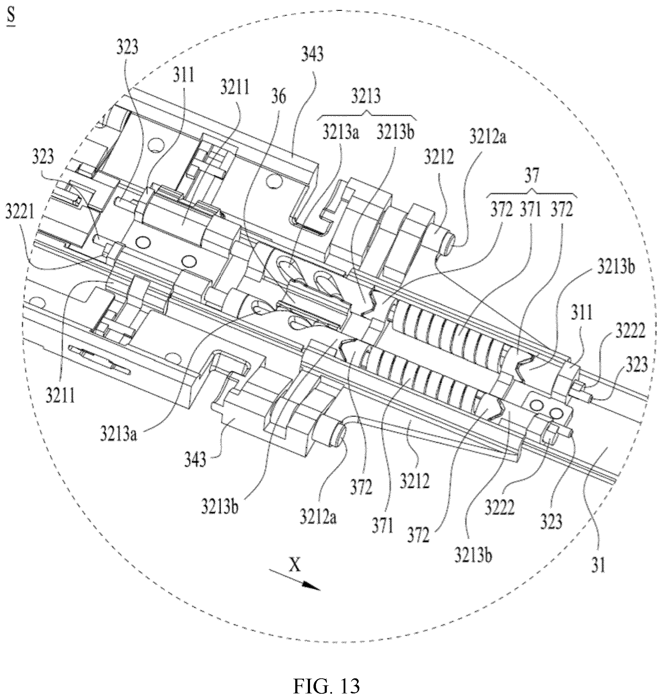

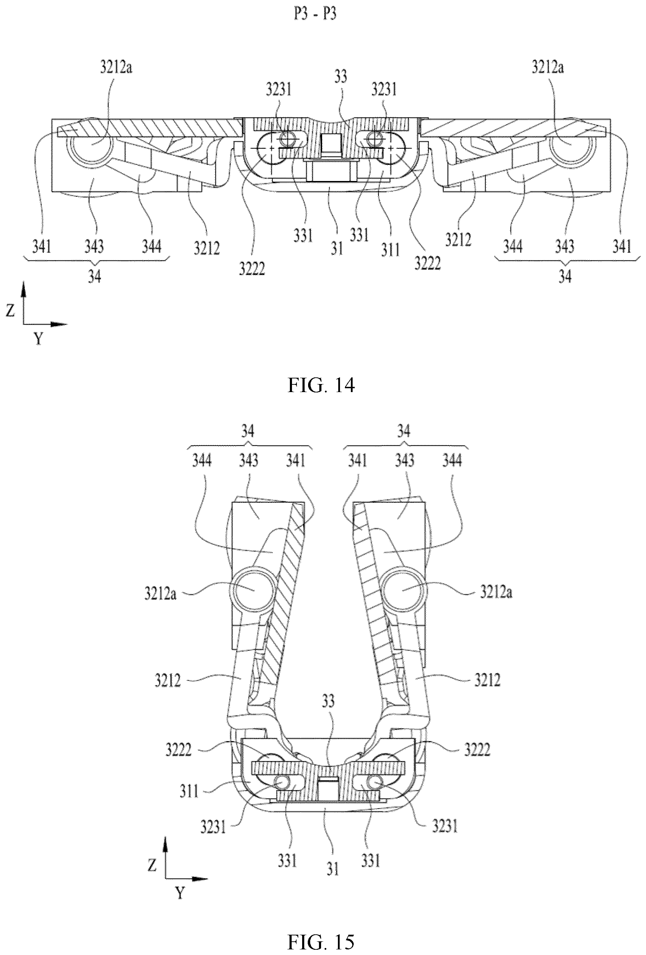

In some implementations, FIG. 13 is an enlarged diagram of a position S in FIG. 6. FIG. 14 is a sectional-view structure in a P3-P3 direction in FIG. 8. FIG. 15 schematically shows a partial sectional-view structure of the rotating shaft apparatus 30 in the folded state according to this application. As shown in FIG. 13 to FIG. 15, the transmission shaft 322 further includes a second rotating shaft 3222. At least one end of the second rotating shaft 3222 is disposed with the lifting/lowering driving portion 323. The transmission swing arm 321 includes a second swing arm 3212. The second swing arm 3212 is connected to the second rotating shaft 3222. The screen support assembly 34 includes an adapter 343, the screen pressing plate 341, and a second rail 344. The adapter 343 is connected to the screen pressing plate 341. The second rail 344 is disposed in the adapter 343. The second swing arm 3212 is slidably connected to the second rail 344. When the screen support assembly 34 is switched between the unfolded position and the folded position, the second swing arm 3212 slides relative to the second rail 344, and the second swing arm 3212 drives the second rotating shaft 3222 to rotate.

In some examples, the rotating shaft apparatus 30 may be connected to the frame 40 by using the adapter 343. For example, the frame 40 includes the middle frame. The rotating shaft apparatus 30 may be connected to the middle frame by using the adapter 343. At least a part of the adapter 343 may be located below the screen pressing plate 341.

In some examples, the adapter 343 and the second rail 344 may be of an integrally formed structure, which helps improve connection strength between the adapter 343 and the second rail 344.

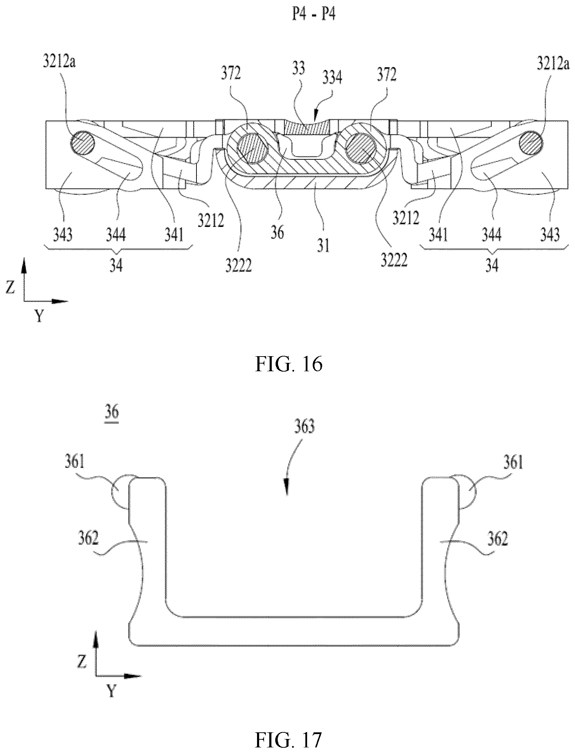

In some examples, FIG. 16 is a sectional-view structure in a P4-P4 direction in FIG. 8. As shown in FIG. 14 to FIG. 16, the second rail 344 may be strip-shaped. When the screen support assembly 34 is in the unfolded position, a connection point between the second swing arm 3212 and the second rail 344 is located at one end that is of the second rail 344 and that is away from the lifting/lowering plate 33. When the screen support assembly 34 is in the folded position, a connection point between the second swing arm 3212 and the second rail 344 is located at one end that is of the second rail 344 and that is close to the lifting/lowering plate 33.

For example, the second rail 344 may include a strip-shaped hole. For example, the strip-shaped hole may be a waist-shaped hole. The second swing arm 3212 includes a second slide post 3212a. The second slide post 3212a slidably cooperates with the strip-shaped hole. When the screen support assembly 34 is in the unfolded position, the second slide post 3212a is located at one end that is of the strip-shaped hole and that is away from the lifting/lowering plate 33. When the screen support assembly 34 is in the folded position, the second slide post 3212a is located at one end that is of the strip-shaped hole and that is close to the lifting/lowering plate 33.

In some examples, in an axial direction of the second rotating shaft 3222, a connection region between the second swing arm 3212 and the second rotating shaft 3222 is located on one side of the lifting/lowering driving portion 323. The axial direction X of the transmission shaft 322 may be the same as the axial direction of the second rotating shaft 3222.

In some examples, one end of the second rotating shaft 3222 is disposed with the lifting/lowering driving portion 323.

In some examples, there may be at least two lifting/lowering plates 33. In the axial direction of the second rotating shaft 3222, the at least two lifting/lowering plates 33 may be spaced apart. Each lifting/lowering plate 33 may be correspondingly disposed with the second rotating shaft 3222. The second rotating shaft 3222 correspondingly disposed on each lifting/lowering plate 33 may be independently disposed. For example, there may be one or more groups of second rotating shafts 3222 correspondingly disposed on each lifting/lowering plate 33. This is not specifically limited in this application. One group of second rotating shafts 3222 may include two second rotating shafts 3222. In the width direction Y of the back cover 31, the two second rotating shafts 3222 in one group of second rotating shafts 3222 may be disposed on the two sides of the lifting/lowering plate 33. The two second rotating shafts 3222 each are connected to the second swing arm 3212.

In some examples, as shown in FIG. 13 and FIG. 16, the two opposite sides of the lifting/lowering plate 33 each are disposed with the second rotating shaft 3222 and the second swing arm 3212. The second swing arm 3212 includes a socket portion 3213. The socket portion 3213 is sleeved on the second rotating shaft 3222. The socket portion 3213 cannot rotate relative to the second rotating shaft 3222. The socket portion 3213 includes a helical hole 3213a. The rotating shaft apparatus 30 further includes a transmission slider 36. In the width direction Y of the back cover 31, the transmission slider 36 is disposed between two second rotating shafts 3222. The transmission slider 36 includes a guide portion 361. The guide portion 361 and the helical hole 3213a slidably cooperate. When the socket portion 3213 drives the second rotating shaft 3222 to rotate synchronously, the socket portion 3213 drives the transmission slider 36 to move synchronously in the axial direction of the second rotating shaft 3222. When the second rotating shaft 3222 on one side of the lifting/lowering plate 33 rotates relative to the back cover 31, power is transmitted to the second rotating shaft 3222 on the other side by using the socket portion 3213 and the transmission slider 36, to effectively ensure that the second rotating shafts 3222 on the two opposite sides of the lifting/lowering plate 33 can rotate synchronously by using the transmission slider 36, and improve rotation accuracy of the second rotating shaft 3222.

For example, the socket portion 3213 of one second swing arm 3212 is provided with two helical holes 3213a. The two helical holes 3213a are spaced apart in the axial direction of the second rotating shaft 3222.

For example, the guide portion 361 of the transmission slider 36 may be spherical, which helps improve stability of sliding processes of the guide portion 361 and the helical hole 3213a.

In some examples, the socket portion 3213 includes an accommodation portion (not shown in the figure) and a push-top cam 3213b facing the accommodation portion. The push-top cam 3213b is sleeved on the second rotating shaft 3222. The second rotating shaft 3222 passes through a central hole of the push-top cam 3213b. The rotating shaft apparatus 30 further includes a damping component 37. At least a part of the damping component 37 is located in the accommodation portion. The damping component 37 includes an elastic member 371 and a guide cam 372. Both the elastic member 371 and the guide cam 372 are sleeved on the second rotating shaft 3222. In the axial direction of the second rotating shaft 3222, the guide cam 372 is disposed between the elastic member 371 and the push-top cam 3213b. The push-top cam 3213b and the guide cam 372 mesh with each other. Each of the push-top cam 3213b and the guide cam 372 is provided with a meshing groove and a meshing convex portion. The meshing convex portion of one of the push-top cams 3213b and the guide cam 372 is inserted into the meshing groove of the other one of the push-top cams 3213b and the guide cam 372, to implement meshing of the push-top cams 3213b and the guide cam 372. One end that is of the guide cam 372 and that faces away from the elastic member 371 may be provided with the meshing groove and the meshing convex portion. Two guide cams 372 that are sleeved on two second rotating shafts 3222 and located on a same side of the elastic member 371 are connected to each other, so that when the push-top cam 3213b and the second rotating shaft 3222 rotate synchronously, the push-top cam 3213b rotates relative to the guide cam 372, but the guide cam 372 does not rotate. For example, the two guide cams 372 may be of an integrally formed structure, which helps improve connection strength.

When the push-top cam 3213b and the second rotating shaft 3222 rotate synchronously, the push-top cam 3213b rotates relative to the guide cam 372. In this way, when moving out of the meshing groove of the guide cam 372, the meshing convex portion of the push-top cam 3213b can push the guide cam 372 to move in the axial direction of the second rotating shaft 3222, so that the guide cam 372 compresses the elastic member 371. When the meshing convex portion of the push-top cam 3213b enters a next meshing groove of the guide cam 372, the elastic member 371 releases elastic potential energy, which may push the guide cam 372 to move in the axial direction of the second rotating shaft 3222, so that the guide cam 372 and the push-top cam 3213b re-mesh. The rotating shaft apparatus 30 forms a resistance force to a rotation process of the second rotating shaft 3222 by using the push-top cam 3213b, the guide cam 372, and the elastic member 371, so that the second swing arm 3212 and the second rotating shaft 3222 can be suspended in a predetermined position, and this helps ensure stability of rotation processes of the second swing arm 3212 and the second rotating shaft 3222.

In some examples, the elastic member 371 may be a helical spring.

In some examples, in the axial direction of the second rotating shaft 3222, two opposite sides of the elastic member 371 are both disposed with the guide cams 372. Correspondingly, the socket portion 3213 includes two push-top cams 3213b. The two push-top cams 3213b may synchronously push the two guide cams 372 to move in the axial direction of the second rotating shaft 3222, so that the two guide cams 372 simultaneously compress or release the elastic member 371, which helps ensure stability and balance of power transmission of the socket portion 3213 and the damping component 37, and helps further improve stability of the rotation processes of the second swing arm 3212 and the second rotating shaft 3222.

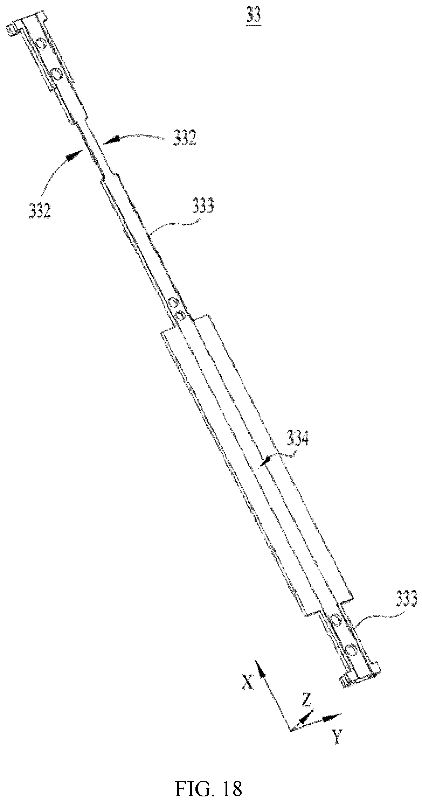

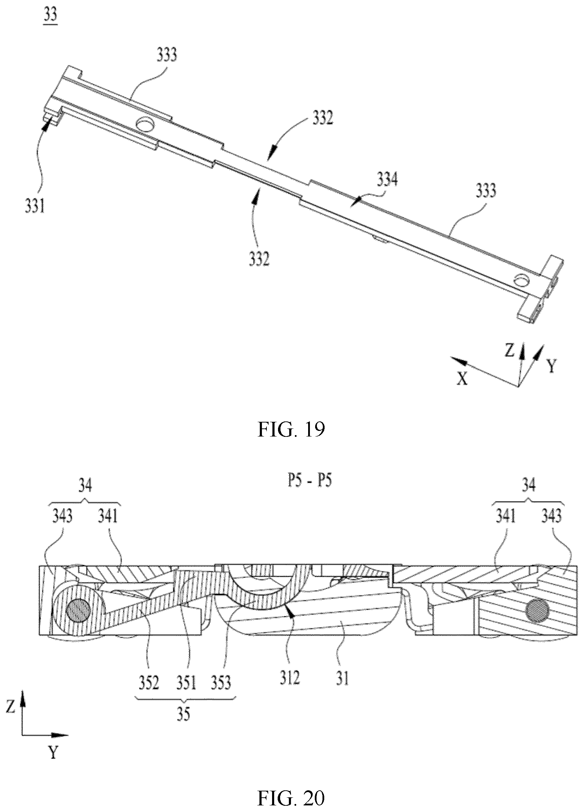

In some examples, FIG. 17 schematically shows a structure of the transmission slider 36 according to this application. FIG. 18 and FIG. 19 schematically show structures of the lifting/lowering plate 33 according to this application. As shown in FIG. 16 and FIG. 17, the lifting/lowering plate 33 is disposed on one side that is of the transmission slider 36 and that faces away from the back cover 31. The transmission slider 36 includes two sidewalls 362. An avoidance groove 363 facing the lifting/lowering plate 33 is formed between the two sidewalls 362. As shown in FIG. 18 and FIG. 19, the lifting/lowering plate 33 has an avoidance portion 332. The sidewall 362 of the transmission slider 36 is provided corresponding to the avoidance portion 332 of the lifting/lowering plate 33. Therefore, the transmission slider 36 and the lifting/lowering plate 33 are not prone to contact, which reduces a possibility of collision and scraping between the transmission slider 36 and the lifting/lowering plate 33.

For example, an edge of the lifting/lowering plate 33 is provided with a notch. The notch forms the avoidance portion 332.

In some implementations, each lifting/lowering plate 33 may be correspondingly disposed with the first rotating shaft 3221 and the first swing arm 3211. Alternatively, each lifting/lowering plate 33 may be correspondingly disposed with the second rotating shaft 3222 and the second swing arm 3212.

In some implementations, each lifting/lowering plate 33 may be correspondingly disposed with the first rotating shaft 3221 and the second rotating shaft 3222. The first rotating shaft 3221 is connected to the first swing arm 3211. The second rotating shaft 3222 is connected to the second swing arm 3212. The second swing arm 3212 includes the socket portion 3213. The socket portion 3213 includes the accommodation portion and the push-top cam 3213b facing the accommodation portion. The rotating shaft apparatus 30 further includes the damping component 37. The damping component 37 includes the elastic member 371 and the guide cam 372. Both the elastic member 371 and the guide cam 372 are sleeved on the second rotating shaft 3222.

For the lifting/lowering plate 33, when the screen support assembly 34 is switched between the unfolded position and the folded position, the screen support assembly 34 drives the first swing arm 3211 and the second swing arm 3212 to rotate relative to the back cover 31. The first swing arm 3211 and the second swing arm 3212 respectively drive the first rotating shaft 3221 and the second rotating shaft 3222 to rotate relative to the back cover 31. The lifting/lowering driving portions 323 disposed in both the first rotating shaft 3221 and the second rotating shaft 3222 may synchronously drive the lifting/lowering plate 33 to rise or fall.

In some examples, in the axial direction of the first rotating shaft 3221, the first rotating shaft 3221 and the second rotating shaft 3222 are spaced apart. The axial direction of the first rotating shaft 3221 may be the same as the axial direction of the second rotating shaft 3222.

In some examples, one end that is of the first rotating shaft 3221 and that is away from the second rotating shaft 3222 is disposed with the lifting/lowering driving portion 323, and one end that is of the second rotating shaft 3222 and that is away from the first rotating shaft 3221 is disposed with the lifting/lowering driving portion 323. Therefore, the lifting/lowering driving portions 323 disposed on the first rotating shaft 3221 and the second rotating shaft 3222 may apply driving acting forces to the two opposite ends of the lifting/lowering plate 33 synchronously. This allows for a balanced distribution of forces on the lifting/lowering plate 33 as a whole, and helps improve stability of the motion process of the lifting/lowering plate 33.

In some examples, there may be two lifting/lowering plates 33. One of the lifting/lowering plates 33 is correspondingly disposed with one group of first rotating shafts 3221 and one group of second rotating shafts 3222. In the axial direction of the first rotating shaft 3221, the group of first rotating shafts 3221 and the group of second rotating shafts 3222 are spaced apart. The group of first rotating shafts 3221 may be disposed close to the screen support door plate 35. The group of first rotating shafts 3221 includes two first rotating shafts 3221. One first swing arm 3211 is connected to one first rotating shaft 3221. The group of second rotating shafts 3222 includes two second rotating shafts 3222. One second swing arm 3212 and one damping component 37 are connected to one second rotating shaft 3222. The transmission slider 36 is disposed between the two second rotating shafts 3222.

The other lifting/lowering plate 33 is correspondingly disposed with two groups of first rotating shafts 3221 and one group of second rotating shafts 3222. In the axial direction of the first rotating shaft 3221, the group of second rotating shafts 3222 is disposed between the two groups of first rotating shafts 3221. One group of first rotating shafts 3221 includes two first rotating shafts 3221. One first swing arm 3211 is connected to one first rotating shaft 3221. The group of second rotating shafts 3222 includes two second rotating shafts 3222. One second swing arm 3212 and one damping component 37 are connected to one second rotating shaft 3222. The transmission slider 36 is disposed between the two second rotating shafts 3222.

In some examples, as shown in FIG. 18 and FIG. 19, the lifting/lowering plate 33 includes a narrowed segment 333 located between two first swing arms 3211 and a narrowed segment 333 between two second swing arms 3212. During a rising/falling process of the lifting/lowering plate 33, the narrowed segment 333 of the lifting/lowering plate 33 can effectively avoid the first swing arm 3211 or the second swing arm 3212, so that no positional interference occurs between the lifting/lowering plate 33 and the first swing arm 3211 or the second swing arm 3212.

In some possible implementations, the rotating shaft apparatus 30 includes a guide convex portion (not shown in the figure) and a guide concave portion (not shown in the figure). The guide convex portion is provided on one of the lifting/lowering plate 33 and the back cover 31, and the guide concave portion is provided on the other one of the lifting/lowering plate 33 and the back cover 31. The guide convex portion and the guide concave portion are slidably connected in a rising/falling direction of the lifting/lowering plate 33. During the rising/falling process of the lifting/lowering plate 33, the guide convex portion may slide relative to the guide concave portion, so that a manner in which the guide convex portion and the guide concave portion slidably cooperate may provide a guide for the rising/falling process of the lifting/lowering plate 33, reduce a possibility that the lifting/lowering plate 33 is tilted, and help improve position stability of the lifting/lowering plate 33 during the rising/falling process.

In some examples, the guide convex portion is provided on the lifting/lowering plate 33, and the guide concave portion is provided on the back cover 31. For example, the guide convex portion may be a guide post.

In some implementations, referring to FIG. 18 and FIG. 19, a surface that is of the lifting/lowering plate 33 and that faces away from the back cover 31 has a groove 334. A bottom wall of the groove 334 may be arc-shaped. When the flexible display 50 is in the folded state, the lifting/lowering plate 33 corresponds to a bending region of the flexible display 50, and the groove 334 on the lifting/lowering plate 33 can effectively avoid the flexible display 50, to reduce a possibility that the lifting/lowering plate 33 squeezes the flexible display 50 and causes damage to the flexible display 50. A shape of the groove 334 on the lifting/lowering plate 33 may match a shape of the bent bending region of the flexible display 50.

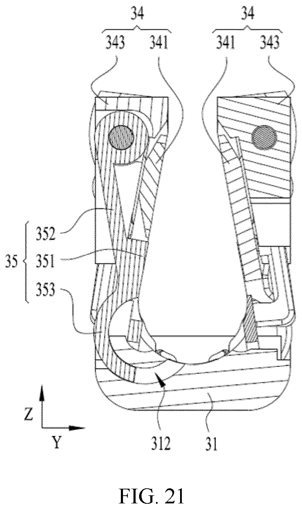

In some possible implementations, FIG. 20 is a sectional-view structure in a P5-P5 direction in FIG. 8. FIG. 21 schematically shows a partial sectional-view structure of the rotating shaft apparatus 30 in the folded state according to this application. As shown in FIG. 20 and FIG. 21, the screen support assembly 34 includes the adapter 343 and the screen pressing plate 341. The adapter 343 is connected to the screen pressing plate 341. The screen support door plate 35 is rotatably connected to the adapter 343. A part that is of the screen support door plate 35 and that is located below the screen pressing plate 341 is used to be rotatably connected to the adapter 343. When the adapter 343 and the screen pressing plate 341 rotate relative to the back cover 31, the adapter 343 may drive the screen support door plate 35 to rotate relative to the back cover 31, and the screen support door plate 35 rotates synchronously relative to the adapter 343.

In some examples, the part that is of the screen support door plate 35 and that is located below the screen pressing plate 341 may be rotatably connected to the adapter 343 by using the rotating shaft.

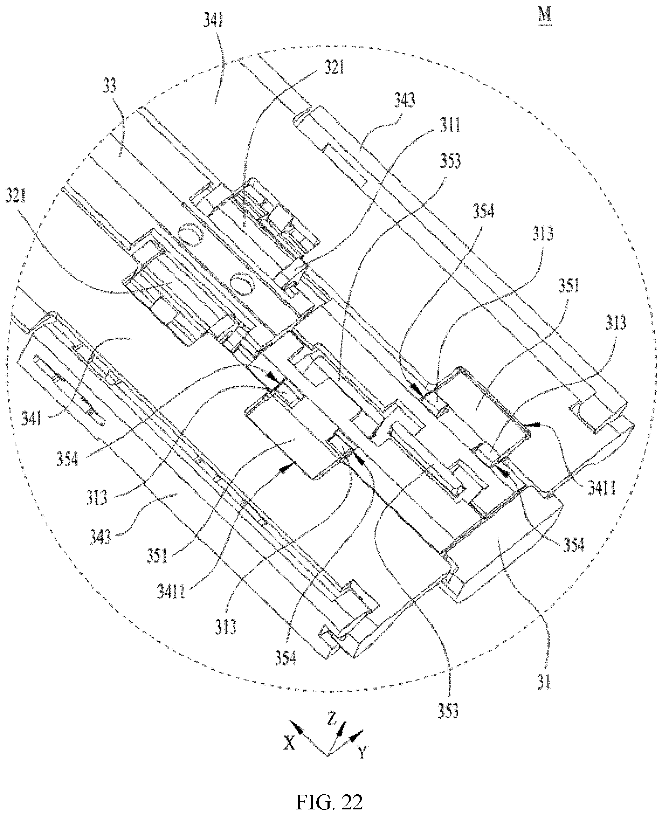

In some examples, FIG. 22 is an enlarged diagram of a position M in FIG. 5. As shown in FIG. 22, the screen pressing plate 341 includes an avoidance notch 3411. The avoidance notch 3411 may be provided on an edge region that is of the screen pressing plate 341 and that faces the back cover 31. The screen support door plate 35 includes a screen support block 351. The screen support block 351 is disposed corresponding to the avoidance notch 3411. When the screen support assembly 34 is switched between the unfolded position and the folded position, the screen support door plate 35 rotates relative to the screen support assembly 34, and the screen support door plate 35 slides relative to the back cover 31, to drive the screen support block 351 to move in the avoidance notch 3411, so that a relative position between a screen support surface of the screen support block 351 and a screen support surface of the screen pressing plate 341 can be adjusted.

When the screen support assembly 34 is in the unfolded position, the screen support surface of the screen support block 351 is located in the avoidance notch 3411, so that a position of the screen support surface of the screen support block 351 is lower than the screen support surface of the screen support door plate 35. There may be a gap between the screen support surface of the screen support block 351 and the flexible display 50.

When the screen support assembly 34 is in the folded position, the screen support surface of the screen support block 351 may be flush with the screen support surface of the screen support door plate 35, to jointly provide support for the bending region of the flexible display 50.

In some examples, two screen pressing plates 341 are connected to the back cover 31. In the axial direction X of the transmission shaft 322, two screen support door plates 35 on a same side of the lifting/lowering plate 33 are connected to the back cover 31. In the width direction Y of the back cover 31, the avoidance notches 3411 of the two screen pressing plates 341 are staggered, and the screen support blocks 351 of the two screen support door plates 35 are staggered.

In some examples, as shown in FIG. 21 and FIG. 22, the screen support door plate 35 includes a rotatable connection portion 352 and an arc-shaped sliding portion 353. The rotatable connection portion 352 is rotatably connected to the screen support assembly 34. For example, the rotatable connection portion 352 may be connected to the screen support assembly 34 by using the rotating shaft. For example, the screen support assembly 34 includes the adapter 343 and the screen pressing plate 341. The rotatable connection portion 352 is located below the screen pressing plate 341. The rotatable connection portion 352 is rotatably connected to the adapter 343. The back cover 31 includes an arc-shaped slide 312. The arc-shaped sliding portion 353 is slidably connected to the arc-shaped slide 312. The arc-shaped slide 312 is circular arc-shaped. Correspondingly, the arc-shaped sliding portion 353 is circular arc-shaped. An axis of the arc-shaped slide 312 is set coaxially with an axis of the arc-shaped sliding portion 353. When the screen support assembly 34 drives the screen support door plate 35 to rotate relative to the back cover 31, the rotatable connection portion 352 of the screen support door plate 35 rotates relative to the screen support assembly 34, and the arc-shaped sliding portion 353 slides synchronously in the arc-shaped slide 312.

In a process in which the screen support assembly 34 is switched from the unfolded position to the folded position, the arc-shaped sliding portions 353 of the screen support door plates 35 move away from each other. In this way, a part that is of the screen support door plate 35 and on which the arc-shaped sliding portion 353 is provided moves away from one end of the lifting/lowering plate 33, so that avoidance space is formed at the end of the lifting/lowering plate 33, to avoid the bending region of the flexible display 50.

In a process in which the screen support assembly 34 is switched from the folded position to the unfolded position, the arc-shaped sliding portions 353 of the screen support door plates 35 move close to each other, so that the arc-shaped sliding portion 353 on the screen support door plate 35 moves to one end of the lifting/lowering plate 33.

In some implementations, the screen support door plate 35 further includes an insertion hole 354. The back cover 31 further includes an insertion block 313. The insertion block 313 passes through the insertion hole 354. When the screen support assembly 34 is switched between the unfolded position and the folded position, the screen support door plate 35 rotates relative to the screen support assembly 34, the screen support door plate 35 slides relative to the back cover 31, and the insertion block 313 moves relative to the insertion hole 354.

In the process in which the screen support assembly 34 is switched from the unfolded position to the folded position, the arc-shaped sliding portions 353 of the screen support door plates 35 move away from each other, and the insertion block 313 may move out of the insertion hole 354. In the process in which the screen support assembly 34 is switched from the folded position to the unfolded position, the arc-shaped sliding portions 353 of the screen support door plates 35 move close to each other, and the insertion block 313 may move into the insertion hole 354.

In some examples, the insertion block 313 is of a circular arc-shaped structure.

In some examples, one screen support door plate 35 may include two insertion holes 354. The two insertion holes 354 are spaced apart in the axial direction X of the transmission shaft 322. Correspondingly, the back cover 31 is disposed with two insertion blocks 313 corresponding to one screen support door plate 35.

In descriptions of embodiments of this application, it should be noted that, unless otherwise clearly specified and limited, the terms "installation", "connection to", and "connection" should be understood in a broad sense. For example, the connection may be a fixed connection, may be an indirect connection by using an intermediate medium, or may be an internal connection between two elements or an interaction relationship between two elements. For persons of ordinary skill in the art, specific meanings of the foregoing terms in embodiments of this application may be understood based on a specific situation.

In embodiments of this application, the foregoing terms do not indicate or imply that a described apparatus or element needs to have a particular orientation or needs to be constructed and operated in a particular orientation, and therefore cannot be construed as a limitation on embodiments of this application. In descriptions of embodiments of this application, unless otherwise specifically limited, "a plurality of" means two or more.

In the specification, claims, and accompanying drawings of embodiments of this application, the terms "first", "second", "third", "fourth", and so on (if existent) are intended to distinguish between similar objects but do not necessarily indicate a specific order or sequence. It should be understood that data used in such a way is interchangeable in a proper circumstance, so that embodiments of this application described herein can be implemented in other orders than the order illustrated or described herein. In addition, the terms "include", "have", and any other variant thereof are intended to cover a non-exclusive inclusion. For example, a process, method, system, product, or device that includes a list of steps or units is not necessarily limited to those steps or units that are expressly listed, but may include other steps or units that are not expressly listed or are inherent to the process, method, system, product, or device.

The term "a plurality of" in this specification means two or more. The term "and/or" in this specification describes only an association relationship for describing associated objects and represents that three relationships may exist. For example, A and/or B may represent the following three cases: Only A exists, both A and B exist, and only B exists. In addition, the character "/" in this specification usually indicates an "or" relationship between the associated objects. In a formula, the character "/" indicates that the associated objects are in a "division" relationship.

It may be understood that various numbers in embodiments of this application are merely used for differentiation for ease of description, and are not used to limit the scope of embodiments of this application.

It may be understood that in embodiments of this application, sequence numbers of the foregoing processes do not mean execution sequences. The execution sequences of the processes should be determined according to functions and internal logic of the processes, and should not be construed as any limitation on the implementation processes of embodiments of this application.

## Claims

1. A rotating shaft apparatus (30), used in a foldable-screen device (10), comprising:
a back cover (31);
a lifting/lowering driving assembly (32), comprising a transmission swing arm (321), a transmission shaft (322), and a lifting/lowering driving portion (323), wherein the transmission swing arm (321) is connected to the transmission shaft (322), the transmission shaft (322) is rotatably connected to the back cover (31), and the lifting/lowering driving portion (323) is connected to the transmission shaft (322); and
a lifting/lowering plate (33), disposed above the back cover (31), wherein
the transmission swing arm (321) is capable of driving the transmission shaft (322) to rotate relative to the back cover (31), to switch the foldable-screen device (10) between an unfolded position and a folded position, the transmission shaft (322) is configured to drive the lifting/lowering driving portion (323) to move, the lifting/lowering driving portion (323) is configured to drive the lifting/lowering plate (33) to rise or fall away from or close to the back cover (31), to enable the lifting/lowering plate (33) to be switched between a rising position and a falling position, and the transmission shaft (322) comprises a first rotating shaft (3221), and at least one end of the first rotating shaft (3221) is engaged with the lifting/lowering driving portion (323).

2. The rotating shaft apparatus (30) according to claim 1, the lifting/lowering driving portion (323) comprises an actuating portion (3231), the actuating portion (3231) is offset from an axis of the transmission shaft (322), the lifting/lowering plate (33) comprises a sliding groove (331), the actuating portion (3231) cooperates with the sliding groove (331), and the transmission shaft (322) is configured to drive the actuating portion (3231) to rotate relative to the sliding groove (331) and slide relative to the sliding groove (331), to drive the lifting/lowering plate (33) to be switched between the rising position and the falling position; the actuating portion (3231) is of a columnar structure;
the rotating shaft apparatus (30) further comprises a connecting block, wherein the connecting block is connected to the actuating portion (3231) and the transmission shaft (322), and the actuating portion (3231) is disposed in a region that is of the connecting block and that is away from the transmission shaft (322), so that the actuating portion (3231) is offset from one side of the transmission shaft (322); wherein in an axial direction of the transmission shaft (322), two ends of the lifting/lowering plate (33) each are correspondingly engaged with the lifting/lowering driving portion (323);
wherein in a thickness direction of the lifting/lowering plate (33), two opposite wall surfaces of the sliding groove (331) are both in contact with the actuating portion (3231); a length direction of the sliding groove (331) is parallel to the width direction of the back cover (31).

3. The rotating shaft apparatus (30) according to claim 1, further comprising a screen support assembly (34), wherein the transmission swing arm (321) is slidably connected to the screen support assembly (34), and the screen support assembly (34) is capable of rotating relative to the back cover (31), to be switched between the unfolded position and the folded position.

4. The rotating shaft apparatus (30) according to claim 3, wherein
the transmission swing arm (321) comprises a first swing arm (3211), and the first swing arm (3211) is connected to the first rotating shaft (3221); and
the screen support assembly (34) comprises a screen pressing plate (341) and a first rail (342), the first rail (342) is connected to the screen pressing plate (341), the first swing arm (3211) is slidably connected to the first rail (342), and when the screen support assembly (34) is switched between the unfolded position and the folded position, the first swing arm (3211) is configured to slide relative to the first rail (342), and the first swing arm (3211) is configured to drive the first rotating shaft (3221) to rotate.

5. The rotating shaft apparatus (30) according to claim 4, wherein the screen pressing plate (341) and the first rail (342) are of an integrally formed structure, and the first rail (342) is strip-shaped.

6. The rotating shaft apparatus (30) according to any one of claims 3 to 5, further comprising a screen support door plate (35), wherein the screen support door plate (35) is slidably connected to the back cover (31).

7. The rotating shaft apparatus (30) according to claim 6, wherein the screen support door plate (35) is rotatably connected to the screen support assembly (34).

8. The rotating shaft apparatus (30) according to claim 6 or 7, wherein the screen support door plate (35) comprises a rotatable connection portion (352) and an arc-shaped sliding portion (353), the rotatable connection portion (352) is rotatably connected to the screen support assembly (34), the back cover (31) comprises an arc-shaped slide (312), and the arc-shaped sliding portion (353) is slidably connected to the arc-shaped slide (312).

9. The rotating shaft apparatus (30) according to any one of claims 6 to 8, comprising two groups of screen support door plates (35), two ends of the back cover (31) are correspondingly engaged with one group of screen support door plates (35), and the lifting/lowering plate (33) is disposed between the two groups of screen support door plates (35); and
each group of screen support door plates (35) comprises two screen support door plates (35), and in a width direction of the back cover (31), the two screen support door plates (35) are respectively disposed on two sides of the back cover (31).

10. The rotating shaft apparatus (30) according to claim 9, wherein the screen support door plate (35) comprises a screen support block (351); and in the width direction of the back cover (31), for each group of screen support door plates (35), the screen support blocks (351) of the screen support door plates (35) located on the two sides of the back cover (31) are staggered.

11. The rotating shaft apparatus (30) according to any one of claims 1 to 10, comprising a guide convex portion and a guide concave portion, the guide convex portion is provided on one of the lifting/lowering plate (33) and the back cover (31), the guide concave portion is provided on the other one of the lifting/lowering plate (33) and the back cover (31), and the guide convex portion and the guide concave portion are slidably connected in a rising/falling direction of the lifting/lowering plate (33).

12. The rotating shaft apparatus (30) according to any one of claims 1 to 11, wherein the transmission swing arm (321) comprises a limiting hole, the limiting hole is a non-circular hole, and the transmission swing arm (321) is sleeved on the transmission shaft (322) through the limiting hole.

13. The rotating shaft apparatus (30) according to any one of claims 1 to 12, comprising two first rotating shafts (3221), and in the width direction of the back cover (31), the two first rotating shafts (3221) are respectively disposed on two sides of the lifting/lowering plate (33);
wherein the transmission swing arm (321) comprises the first swing arm (3211), and the first swing arm (3211) is connected to the first rotating shaft (3221); the first swing arm (3211) comprises a socket portion (3213), the socket portion (3213) comprises a push-top cam (3213b), and the push-top cam (3213b) is sleeved on the first rotating shaft (3221); and the rotating shaft apparatus (30) further comprises a damping component (37), the damping component (37) comprises a helical spring and a guide cam (372), the helical spring and the guide cam (372) are both sleeved on the first rotating shaft (3221), the guide cam (372) is disposed between the helical spring and the push-top cam (3213b), and the helical spring is disposed between the guide cam (372) and the lifting/lowering driving portion (323).

14. A foldable-screen device (10), comprising:
the rotating shaft apparatus (30) according to any one of claims 1 to 13, wherein two opposite sides of the rotating shaft apparatus (30) each are connected to a frame (40), and the frame (40) is capable of rotating relative to the rotating shaft apparatus (30); and
a flexible display (50), wherein the flexible display (50) comprises a first display region (51), a second display region (52), and a third display region (53), the first display region (51) and the second display region (52) are respectively disposed above two frames (40), and the third display region (53) is disposed above the rotating shaft apparatus (30).

15. The foldable-screen device (10) according to claim 14, wherein the back cover (31) is located between the two frames (40); and
the two frames (40) rotate relative to the rotating shaft apparatus (30), so that when the foldable-screen device (10) is in an unfolded state, the two frames (40) block the back cover (31), so that the back cover (31) is not visible from the exterior; when the two frames (40) are in a folded state, at least a part of the back cover (31) is exposed to the two frames (40); when the transmission swing arm (321) is in the unfolded position, the flexible display (50) is in the unfolded state, the lifting/lowering plate (33) is in the rising position, and the lifting/lowering plate (33) provides support for the flexible display (50); and when the transmission swing arm (321) is in the folded position, the flexible display (50) is in a folded state, and the lifting/lowering plate (33) is in the falling position.

## Patentansprüche

1. Drehwellenvorrichtung (30), verwendet in einem Faltbildschirmgerät (10), umfassend:
eine hintere Abdeckung (31);
eine Hub-Antriebseinheit (32), umfassend einen Getriebeschwenkarm (321), eine Getriebewelle (322) und einen Hub-Antriebsabschnitt (323), wobei der Getriebeschwenkarm (321) mit der Getriebewelle (322) verbunden ist, die Getriebewelle (322) drehbar mit der hinteren Abdeckung (31) verbunden ist und der Hub-Antriebsabschnitt (323) mit der Getriebewelle (322) verbunden ist; und
eine Hubplatte (33), die über der hinteren Abdeckung (31) angeordnet ist, wobei
der Getriebeschwenkarm (321) in der Lage ist, die Getriebewelle (322) zu einer Drehung relativ zur hinteren Abdeckung (31) anzutreiben, um das Faltbildschirmgerät (10) zwischen einer aufgeklappten Position und einer zusammengeklappten Position umzuschalten, die Getriebewelle (322) dazu konfiguriert ist, den Hub-Antriebsabschnitt (323) zu einer Bewegung anzutreiben, der Hub-Antriebsabschnitt (323) dazu konfiguriert ist, die Hubplatte (33) anzutreiben, um sich von der hinteren Abdeckung (31) wegzuheben oder ihr anzunähern, damit die Hubplatte (33) zwischen einer angehobenen Position und einer abgesenkten Position umgeschaltet werden kann, und die Getriebewelle (322) eine erste Drehwelle (3221) umfasst, und wobei mindestens ein Ende der ersten Drehwelle (3221) mit dem Hub-Antriebsabschnitt (323) in Eingriff steht.

2. Drehwellenvorrichtung (30) nach Anspruch 1, wobei der Hub-Antriebsabschnitt (323) einen Betätigungsabschnitt (3231) umfasst, wobei der Betätigungsabschnitt (3231) von einer Achse der Getriebewelle (322) versetzt ist, die Hubplatte (33) eine Gleitnut (331) umfasst, der Betätigungsabschnitt (3231) mit der Gleitnut (331) zusammenwirkt und die Getriebewelle (322) dazu konfiguriert ist, den Betätigungsabschnitt (3231) anzutreiben, um sich relativ zur Gleitnut (331) zu drehen und relativ zur Gleitnut (331) zu gleiten, um die Hubplatte (33) anzutreiben, zwischen der angehobenen Position und der abgesenkten Position umgeschaltet zu werden; wobei der Betätigungsabschnitt (3231) eine säulenförmige Struktur aufweist;
wobei die Drehwellenvorrichtung (30) ferner einen Verbindungsblock umfasst, wobei der Verbindungsblock mit dem Betätigungsabschnitt (3231) und der Getriebewelle (322) verbunden ist und der Betätigungsabschnitt (3231) in einem Bereich des Verbindungsblocks angeordnet ist, der von der Getriebewelle (322) entfernt liegt, sodass der Betätigungsabschnitt (3231) von einer Seite der Getriebewelle (322) versetzt ist; wobei in einer axialen Richtung der Getriebewelle (322) zwei Enden der Hubplatte (33) jeweils entsprechend mit dem Hub-Antriebsabschnitt (323) in Eingriff stehen;
wobei in einer Dickenrichtung der Hebe-/Senkplatte (33) zwei gegenüberliegende Wandflächen der Gleitnut (331) beide mit dem Betätigungsabschnitt (3231) in Kontakt stehen; eine Längsrichtung der Gleitnut (331) parallel zur Breitenrichtung der hinteren Abdeckung (31) verläuft.

3. Drehwellenvorrichtung (30) nach Anspruch 1, ferner umfassend eine Bildschirmstützbaugruppe (34), wobei der Übertragungsschwenkarm (321) verschiebbar mit der Bildschirmstützbaugruppe (34) verbunden ist und die Bildschirmstützbaugruppe (34) relativ zur hinteren Abdeckung (31) drehbar ist, um zwischen der aufgeklappten Position und der zusammengeklappten Position umgeschaltet zu werden.

4. Drehwellenvorrichtung (30) nach Anspruch 3, wobei
der Übertragungsschwenkarm (321) einen ersten Schwenkarm (3211) umfasst und der erste Schwenkarm (3211) mit der ersten Drehwelle (3221) verbunden ist; und
die Bildschirmstützbaugruppe (34) eine Bildschirmdruckplatte (341) und eine erste Schiene (342) umfasst, wobei die erste Schiene (342) mit der Bildschirmdruckplatte (341) verbunden ist, der erste Schwenkarm (3211) verschiebbar mit der ersten Schiene (342) verbunden ist und, wenn die Bildschirmstützbaugruppe (34) zwischen der aufgeklappten Position und der zusammengeklappten Position umgeschaltet wird, der erste Schwenkarm (3211) dazu konfiguriert ist, relativ zur ersten Schiene (342) zu gleiten, und der erste Schwenkarm (3211) dazu konfiguriert ist, die erste Drehwelle (3221) zur Drehung anzutreiben.

5. Drehwellenvorrichtung (30) nach Anspruch 4, wobei die Bildschirmdruckplatte (341) und die erste Schiene (342) eine einstückig geformte Struktur aufweisen und die erste Schiene (342) streifenförmig ist.

6. Drehwellenvorrichtung (30) nach einem der Ansprüche 3 bis 5, ferner umfassend eine Bildschirmstütztürplatte (35), wobei die Bildschirmstütztürplatte (35) verschiebbar mit der hinteren Abdeckung (31) verbunden ist.

7. Drehwellenvorrichtung (30) nach Anspruch 6, wobei die Bildschirmstütztürplatte (35) drehbar mit der Bildschirmstützbaugruppe (34) verbunden ist.

8. Drehwellenvorrichtung (30) nach Anspruch 6 oder 7, wobei die Bildschirmstütztürplatte (35) einen drehbaren Verbindungsabschnitt (352) und einen bogenförmigen Gleitabschnitt (353) umfasst, der drehbare Verbindungsabschnitt (352) drehbar mit der Bildschirmstützbaugruppe (34) verbunden ist, die hintere Abdeckung (31) einen bogenförmigen Schlitten (312) umfasst und der bogenförmige Gleitabschnitt (353) verschiebbar mit dem bogenförmigen Schlitten (312) verbunden ist.

9. Drehwellenvorrichtung (30) nach einem der Ansprüche 6 bis 8, umfassend zwei Gruppen von Siebträger-Türplatten (35), wobei zwei Enden der Rückabdeckung (31) entsprechend mit einer Gruppe von Siebträger-Türplatten (35) in Eingriff stehen und die Hebe-/Senkplatte (33) zwischen den beiden Gruppen von Siebträger-Türplatten (35) angeordnet ist; und
wobei jede Gruppe von Siebträger-Türplatten (35) zwei Siebträger-Türplatten (35) umfasst und die beiden Siebträger-Türplatten (35) in Breitenrichtung der Rückabdeckung (31) jeweils auf zwei Seiten der Rückabdeckung (31) angeordnet sind.

10. Drehwellenvorrichtung (30) nach Anspruch 9, wobei die Siebträger-Türplatte (35) einen Siebträgerblock (351) umfasst; und wobei in der Breitenrichtung der Rückabdeckung (31) für jede Gruppe von Siebträger-Türplatten (35) die Siebträgerblöcke (351) der auf den beiden Seiten der Rückabdeckung (31) befindlichen Siebträger-Türplatten (35) versetzt zueinander angeordnet sind.

11. Drehwellenvorrichtung (30) nach einem der Ansprüche 1 bis 10, umfassend einen Führungsvorsprung und eine Führungsausnehmung, wobei der Führungsvorsprung an einem der Elemente Hebe-/Senkplatte (33) oder Rückabdeckung (31) vorgesehen ist, die Führungsausnehmung am jeweils anderen der Elemente Hebe-/Senkplatte (33) oder Rückabdeckung (31) vorgesehen ist und der Führungsvorsprung sowie die Führungsausnehmung in einer Hubrichtung der Hebe-/Senkplatte (33) gleitend miteinander verbunden sind.

12. Drehwellenvorrichtung (30) nach einem der Ansprüche 1 bis 11, wobei der Getriebeschwenkarm (321) ein Begrenzungsloch umfasst, wobei das Begrenzungsloch ein nicht kreisförmiges Loch ist und der Getriebeschwenkarm (321) durch das Begrenzungsloch auf die Getriebewelle (322) aufgesteckt ist.

13. Drehwellenvorrichtung (30) nach einem der Ansprüche 1 bis 12, umfassend zwei erste Drehwellen (3221), wobei in Breitenrichtung der Rückabdeckung (31) die beiden ersten Drehwellen (3221) jeweils auf zwei Seiten der Hebe-/Senkplatte (33) angeordnet sind;
wobei der Übertragungsschwenkarm (321) den ersten Schwenkarm (3211) umfasst und der erste Schwenkarm (3211) mit der ersten Drehwelle (3221) verbunden ist; wobei der erste Schwenkarm (3211) einen Aufnahmeabschnitt (3213) umfasst, wobei der Aufnahmeabschnitt (3213) einen Push-Top-Nocken (3213b) umfasst und der Push-Top-Nocken (3213b) auf der ersten Drehwelle (3221) aufgesteckt ist; und wobei die Drehwellenvorrichtung (30) ferner eine Dämpfungskomponente (37) umfasst, wobei die Dämpfungskomponente (37) eine Schraubenfeder und einen Führungsnocken (372) umfasst, wobei die Schraubenfeder und der Führungsnocken (372) beide auf der ersten Drehwelle (3221) aufgesteckt sind, der Führungsnocken (372) zwischen der Schraubenfeder und dem Push-Top-Nocken (3213b) angeordnet ist und die Schraubenfeder zwischen dem Führungsnocken (372) und dem Hub-/Senkantriebsabschnitt (323) angeordnet ist.

14. Faltbares Bildschirmgerät (10), umfassend:
die Drehwellenvorrichtung (30) nach einem der Ansprüche 1 bis 13, wobei zwei gegenüberliegende Seiten der Drehwellenvorrichtung (30) jeweils mit einem Rahmen (40) verbunden sind und der Rahmen (40) in der Lage ist, sich relativ zu der Drehwellenvorrichtung (30) zu drehen; und
ein flexibles Display (50), wobei das flexible Display (50) einen ersten Anzeigebereich (51), einen zweiten Anzeigebereich (52) und einen dritten Anzeigebereich (53) umfasst, wobei der erste Anzeigebereich (51) und der zweite Anzeigebereich (52) jeweils über zwei Rahmen (40) angeordnet sind und der dritte Anzeigebereich (53) über der Drehwellenvorrichtung (30) angeordnet ist.

15. Faltbares Bildschirmgerät (10) nach Anspruch 14, wobei sich die Rückabdeckung (31) zwischen den beiden Rahmen (40) befindet; und
die beiden Rahmen (40) sich relativ zu der Drehwellenvorrichtung (30) drehen, sodass, wenn sich das faltbare Bildschirmgerät (10) in einem entfalteten Zustand befindet, die beiden Rahmen (40) die Rückabdeckung (31) blockieren, sodass die Rückabdeckung (31) von außen nicht sichtbar ist; wenn sich die beiden Rahmen (40) in einem gefalteten Zustand befinden, zumindest ein Teil der Rückabdeckung (31) zu den beiden Rahmen (40) hin freiliegt; wenn sich der Übertragungsschwenkarm (321) in der entfalteten Position befindet, sich das flexible Display (50) im entfalteten Zustand befindet, sich die Hub-/Senkplatte (33) in der angehobenen Position befindet und die Hub-/Senkplatte (33) eine Stütze für das flexible Display (50) bereitstellt; und wenn sich der Übertragungsschwenkarm (321) in der gefalteten Position befindet, sich das flexible Display (50) in einem gefalteten Zustand befindet und sich die Hub-/Senkplatte (33) in der abgesenkten Position befindet.

## Revendications

1. Un appareil à arbre rotatif (30), utilisé dans un dispositif à écran pliable (10), comprenant :
un couvercle arrière (31) ;
un ensemble d'entraînement de levage/abaissement (32), comprenant un bras oscillant de transmission (321), un arbre de transmission (322) et une partie d'entraînement de levage/abaissement (323), dans lequel le bras oscillant de transmission (321) est relié à l'arbre de transmission (322), l'arbre de transmission (322) est relié de manière rotative au couvercle arrière (31), et la partie d'entraînement de levage/abaissement (323) est reliée à l'arbre de transmission (322) ; et
une plaque de levage/abaissement (33), disposée au-dessus du couvercle arrière (31), dans laquelle
le bras oscillant de transmission (321) est capable d'entraîner l'arbre de transmission (322) en rotation par rapport au couvercle arrière (31), pour commuter le dispositif à écran pliable (10) entre une position dépliée et une position pliée, l'arbre de transmission (322) est configuré pour entraîner la partie d'entraînement de levage/abaissement (323) en mouvement, la partie d'entraînement de levage/abaissement (323) est configurée pour entraîner la plaque de levage/abaissement (33) à monter ou descendre en s'éloignant ou en se rapprochant du couvercle arrière (31), pour permettre à la plaque de levage/abaissement (33) d'être commutée entre une position haute et une position basse, et l'arbre de transmission (322) comprend un premier arbre rotatif (3221), et au moins une extrémité du premier arbre rotatif (3221) est en prise avec la partie d'entraînement de levage/abaissement (323).

2. L'appareil à arbre rotatif (30) selon la revendication 1, la partie d'entraînement de levage/abaissement (323) comprend une partie d'actionnement (3231), la partie d'actionnement (3231) est décalée par rapport à un axe de l'arbre de transmission (322), la plaque de levage/abaissement (33) comprend une rainure de coulissement (331), la partie d'actionnement (3231) coopère avec la rainure de coulissement (331), et l'arbre de transmission (322) est configuré pour entraîner la partie d'actionnement (3231) en rotation par rapport à la rainure de coulissement (331) et en coulissement par rapport à la rainure de coulissement (331), pour entraîner la plaque de levage/abaissement (33) à commuter entre la position haute et la position basse ; la partie d'actionnement (3231) est d'une structure colonnaire ;
l'appareil à arbre rotatif (30) comprend en outre un bloc de connexion, dans lequel le bloc de connexion est relié à la partie d'actionnement (3231) et à l'arbre de transmission (322), et la partie d'actionnement (3231) est disposée dans une région qui est celle du bloc de connexion et qui est éloignée de l'arbre de transmission (322), de sorte que la partie d'actionnement (3231) est décalée d'un côté de l'arbre de transmission (322) ; dans lequel, dans une direction axiale de l'arbre de transmission (322), deux extrémités de la plaque de levage/abaissement (33) sont chacune en prise de manière correspondante avec la partie d'entraînement de levage/abaissement (323) ;
dans lequel, dans une direction d'épaisseur de la plaque de levage/abaissement (33), deux surfaces de paroi opposées de la rainure de coulissement (331) sont toutes deux en contact avec la partie d'actionnement (3231) ; une direction de longueur de la rainure de coulissement (331) est parallèle à la direction de largeur du capot arrière (31).

3. Appareil à arbre rotatif (30) selon la revendication 1, comprenant en outre un ensemble de support d'écran (34), dans lequel le bras oscillant de transmission (321) est relié de manière coulissante à l'ensemble de support d'écran (34), et l'ensemble de support d'écran (34) est capable de pivoter par rapport au capot arrière (31), pour être commuté entre la position dépliée et la position repliée.

4. Appareil à arbre rotatif (30) selon la revendication 3, dans lequel
le bras oscillant de transmission (321) comprend un premier bras oscillant (3211), et le premier bras oscillant (3211) est relié au premier arbre rotatif (3221) ; et
l'ensemble de support d'écran (34) comprend une plaque de pression d'écran (341) et un premier rail (342), le premier rail (342) est relié à la plaque de pression d'écran (341), le premier bras oscillant (3211) est relié de manière coulissante au premier rail (342), et lorsque l'ensemble de support d'écran (34) est commuté entre la position dépliée et la position repliée, le premier bras oscillant (3211) est configuré pour coulisser par rapport au premier rail (342), et le premier bras oscillant (3211) est configuré pour entraîner le premier arbre rotatif (3221) en rotation.

5. Appareil à arbre rotatif (30) selon la revendication 4, dans lequel la plaque de pression d'écran (341) et le premier rail (342) sont d'une structure formée intégralement, et le premier rail (342) est en forme de bande.

6. Appareil à arbre rotatif (30) selon l'une quelconque des revendications 3 à 5, comprenant en outre une plaque de porte de support d'écran (35), dans lequel la plaque de porte de support d'écran (35) est reliée de manière coulissante au capot arrière (31).

7. Appareil à arbre rotatif (30) selon la revendication 6, dans lequel la plaque de porte de support d'écran (35) est reliée de manière rotative à l'ensemble de support d'écran (34).

8. Appareil à arbre rotatif (30) selon la revendication 6 ou 7, dans lequel la plaque de porte de support d'écran (35) comprend une partie de connexion rotative (352) et une partie coulissante en forme d'arc (353), la partie de connexion rotative (352) est reliée de manière rotative à l'ensemble de support d'écran (34), le capot arrière (31) comprend une glissière en forme d'arc (312), et la partie coulissante en forme d'arc (353) est reliée de manière coulissante à la glissière en forme d'arc (312).

9. L'appareil à arbre rotatif (30) selon l'une quelconque des revendications 6 à 8, comprenant deux groupes de plaques de porte de support d'écran (35), deux extrémités du capot arrière (31) sont engagées de manière correspondante avec un groupe de plaques de porte de support d'écran (35), et la plaque de levage/abaissement (33) est disposée entre les deux groupes de plaques de porte de support d'écran (35) ; et
chaque groupe de plaques de porte de support d'écran (35) comprend deux plaques de porte de support d'écran (35), et dans une direction de largeur du capot arrière (31), les deux plaques de porte de support d'écran (35) sont respectivement disposées sur deux côtés du capot arrière (31).

10. L'appareil à arbre rotatif (30) selon la revendication 9, dans lequel la plaque de porte de support d'écran (35) comprend un bloc de support d'écran (351) ; et dans la direction de largeur du capot arrière (31), pour chaque groupe de plaques de porte de support d'écran (35), les blocs de support d'écran (351) des plaques de porte de support d'écran (35) situées sur les deux côtés du capot arrière (31) sont décalés.

11. L'appareil à arbre rotatif (30) selon l'une quelconque des revendications 1 à 10, comprenant une partie convexe de guidage et une partie concave de guidage, la partie convexe de guidage est prévue sur l'un parmi la plaque de levage/abaissement (33) et le capot arrière (31), la partie concave de guidage est prévue sur l'autre parmi la plaque de levage/abaissement (33) et le capot arrière (31), et la partie convexe de guidage et la partie concave de guidage sont reliées de manière coulissante dans une direction de montée/descente de la plaque de levage/abaissement (33).

12. L'appareil à arbre rotatif (30) selon l'une quelconque des revendications 1 à 11, dans lequel le bras oscillant de transmission (321) comprend un trou de limitation, le trou de limitation est un trou non circulaire, et le bras oscillant de transmission (321) est manchonné sur l'arbre de transmission (322) à travers le trou de limitation.

13. L'appareil à arbre rotatif (30) selon l'une quelconque des revendications 1 à 12, comprenant deux premiers arbres rotatifs (3221), et dans la direction de largeur du capot arrière (31), les deux premiers arbres rotatifs (3221) sont respectivement disposés sur deux côtés de la plaque de levage/abaissement (33) ;
dans lequel le bras oscillant de transmission (321) comprend le premier bras oscillant (3211), et le premier bras oscillant (3211) est relié au premier arbre rotatif (3221) ; le premier bras oscillant (3211) comprend une partie emboîtement (3213), la partie emboîtement (3213) comprend une came de poussée supérieure (3213b), et la came de poussée supérieure (3213b) est emmanchée sur le premier arbre rotatif (3221) ; et l'appareil à arbre rotatif (30) comprend en outre un composant d'amortissement (37), le composant d'amortissement (37) comprend un ressort hélicoïdal et une came de guidage (372), le ressort hélicoïdal et la came de guidage (372) sont tous deux emmanchés sur le premier arbre rotatif (3221), la came de guidage (372) est disposée entre le ressort hélicoïdal et la came de poussée supérieure (3213b), et le ressort hélicoïdal est disposé entre la came de guidage (372) et la partie d'entraînement de levage/abaissement (323).

14. Dispositif à écran pliable (10), comprenant :
l'appareil à arbre rotatif (30) selon l'une quelconque des revendications 1 à 13, dans lequel deux côtés opposés de l'appareil à arbre rotatif (30) sont chacun reliés à un cadre (40), et le cadre (40) est capable de pivoter par rapport à l'appareil à arbre rotatif (30) ; et
un écran flexible (50), dans lequel l'écran flexible (50) comprend une première zone d'affichage (51), une deuxième zone d'affichage (52) et une troisième zone d'affichage (53), la première zone d'affichage (51) et la deuxième zone d'affichage (52) sont disposées respectivement au-dessus de deux cadres (40), et la troisième zone d'affichage (53) est disposée au-dessus de l'appareil à arbre rotatif (30).

15. Dispositif à écran pliable (10) selon la revendication 14, dans lequel le capot arrière (31) est situé entre les deux cadres (40) ; et
les deux cadres (40) pivotent par rapport à l'appareil à arbre rotatif (30), de sorte que lorsque le dispositif à écran pliable (10) est dans un état déplié, les deux cadres (40) bloquent le capot arrière (31), de sorte que le capot arrière (31) n'est pas visible de l'extérieur ; lorsque les deux cadres (40) sont dans un état plié, au moins une partie du capot arrière (31) est exposée aux deux cadres (40) ; lorsque le bras oscillant de transmission (321) est dans la position dépliée, l'écran flexible (50) est dans l'état déplié, la plaque de levage/abaissement (33) est dans la position levée, et la plaque de levage/abaissement (33) fournit un support pour l'écran flexible (50) ; et lorsque le bras oscillant de transmission (321) est dans la position pliée, l'écran flexible (50) est dans un état plié, et la plaque de levage/abaissement (33) est dans la position abaissée.
